(19) Europäisches Patentamt
European Patent Office
Office européen des brevets

(11) **EP 3 465 074 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **17737483.2**

(22) Anmeldetag: **01.06.2017**

(51) Int Cl.:
***G01B 9/02*** (2006.01)

(86) Internationale Anmeldenummer:
**PCT/EP2017/063270**

(87) Internationale Veröffentlichungsnummer:
**WO 2017/211665 (14.12.2017 Gazette 2017/50)**

(54) **VERFAHREN ZUR BESTIMMUNG EINER PHASE EINES EINGANGSSTRAHLENBÜNDELS**

METHOD FOR DETERMINING A PHASE OF AN INPUT BEAM BUNDLE

PROCÉDÉ DE DÉTERMINATION D'UNE PHASE D'UN FAISCEAU DE RAYONS D'ENTRÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.06.2016 DE 102016110362**

(43) Veröffentlichungstag der Anmeldung:
**10.04.2019 Patentblatt 2019/15**

(73) Patentinhaber: **Berz, Martin**
**81675 München (DE)**

(72) Erfinder: **Berz, Martin**
**81675 München (DE)**

(74) Vertreter: **Global IP Europe Patentanwaltskanzlei**
**Pfarrstraße 14**
**80538 München (DE)**

(56) Entgegenhaltungen:
**US-A- 4 396 289**

- GRILLI S ET AL: "Whole optical wavefields reconstruction by Digital Holography", OPTICS EXPRESS, OSA PUBLISHING, Bd. 9, Nr. 6, 10. September 2001 (2001-09-10), Seiten 294-302, XP002364435, ISSN: 1094-4087, DOI: 10.1364/OE.9.000294

- FU S ET AL: "Phase difference amplification of double-exposure holograms", OPTICS COMMUNICATIONS, ELSEVIER, AMSTERDAM, NL, Bd. 67, Nr. 6, 15. August 1988 (1988-08-15), Seiten 419-420, XP002109771, ISSN: 0030-4018, DOI: 10.1016/0030-4018(88)90212-X

**EP 3 465 074 B1**

**Beschreibung**

Die Erfindung betrifft ein Verfahren zur Bestimmung zumindest einer Phase eines Eingangsstrahlenbündels, wobei das Verfahren referenzstrahlfrei durchgeführt wird. Das Verfahren kann mit einem Interferometer bzw. einem Interferometersystem durchgeführt werden. Das Verfahren kann zur holographischen Abbildung eines Objekts verwendet werden.

Unter einem Interferometersystem bzw. einem Interferometer kann hierbei und im Folgenden eine Vorrichtung, ein Aufbau und/oder eine Struktur verstanden werden, durch welche eine interferometrische Messung ermöglicht wird. Hierbei ist es nicht zwingend notwendig, dass diese Vorrichtung, dieser Aufbau oder dieser Struktur bereits eine interferometrische Messung durchführt. Bekannte Interferometer sind beispielsweise das Michelson-Interferometer, das Mach-Zehnder-Interferometer, das Sagnac-Interferometer oder das Fabry-Perot-Interferometer. Allen bei dem Verfahren dieser Anmeldung eingesetzten Interferometern kann gemeinsam sein, dass es mindestens zwei Strahlenbündel gibt. Ferner kann allen bei dem Verfahren dieser Anmeldung eingesetzten Interferometern gemeinsam sein, dass es mindestens einen Strahlteiler gibt, der aus einem Eingangsstrahlenbündel mindestens zwei Strahlenbündel erzeugt. Die Interferometerarme können räumlich getrennt sein oder überlappen.

Die durch eine Interferenz mehrerer Felder erzeugten Intensitätsschwankungen werden insbesondere Interferogramm genannt. Insbesondere kann es sich bei einem Interferogramm um ein Intensitätsmuster handeln. Mit den Begriffen "holographische Abbildung" bzw. "Holographie" kann hierbei und im Folgenden eine interferometrische Technik gemeint sein, die es erlaubt, die Amplituden- und die Phaseninformation einer Wellenfront zu speichern, zu rekonstruieren und/oder zu messen und ein Hologramm zu erzeugen. Ein "Hologramm" ist hierbei und im Folgenden eine, insbesondere allgemeine, Aufnahme eines Phasenbildes. Beispielsweise ist ein Hologramm mit einem oder mehreren Interferogrammen gebildet. Die Erzeugung eines Hologramms kann weitere physikalische Schritte und/oder die Verarbeitung mehrerer Interferogramme erfordern. Die Erzeugung von Hologrammen kann physikalisch, beispielsweise mittels einer Fotoplatte, oder digital, beispielsweise mittels digitalen Speicherns des Interferogramms und digitalen Rekonstruierens, erfolgen. Im Fall von der sogenannten digitalen Holographie wird das Hologramm digital gespeichert. Ferner kann hierbei und im Folgenden unter dem Begriff "holographische Kamera" eine Vorrichtung gemeint sein, die dazu geeignet ist, die Phase und/oder die Amplitude eines einfallenden Feldes, insbesondere eines Lichtfeldes, zu messen.

Bei gewöhnlichen Interferometern und holographischen Messsystemen bzw. Kameras wird ein ungebeugter und/oder unreflektierter, insbesondere externer, Referenzstrahl eingesetzt. Im Fall eines externen Referenzstrahls müssen die räumlichen Gegebenheiten des Messaufbaus, beispielsweise einer Strahlquelle, des Objekts und/oder weiterer Messvorrichtungen, zur Bereitstellung des Referenzstrahls geeignet sein, da ansonsten die Messung nicht durchführbar ist.

Die Druckschrift US 4,396,289 beschreibt eine holographisches interferometrisches Verfahren zur Bestimmung von Dimensionsunterschieden zweier Objekte mit komplementärer Form.

Es ist eine Aufgabe der Erfindung ein Verfahren bereitzustellen, das eine referenzstrahlfreie Bestimmung einer Phase eines Eingangsstrahlenbündels ermöglicht. Eine weitere Aufgabe der Erfindung ist es, ein Verfahren bereitzustellen, das es erlaubt, referenzstrahlfrei eine Interferenz zwischen zwei unbekannten Feldern so auszuwerten, dass hierbei die Phase zumindest eines der Felder bestimmt wird. Diese Aufgabe wird durch ein Verfahren gemäß dem Anspruch 1 gelöst. Die Unteransprüche definieren weitere Ausführungsformen der Erfindung.

Es wird ein Verfahren zur Bestimmung einer Phase eines Eingangsstrahlenbündels bereitgestellt. Beispielsweise ist es möglich, durch die Bestimmung der Phase dreidimensionale Strukturen eines Objekts zu vermessen. Bei den dreidimensionalen Strukturen kann es sich um Oberflächenstrukturen und/oder die dreidimensionale Form des Objekts handeln. Alternativ oder zusätzlich ist es durch die Bestimmung der Phase möglich, eine holographische Abbildung eines, insbesondere dreidimensionalen, Objekts zu erzeugen. Beispielsweise kann das Verfahren zur Erzeugung eines Hologramms in einer holographischen Kamera eingesetzt werden. Das Verfahren kann physikalisch und/oder digital umgesetzt werden. Unter "physikalisch" kann hierbei und im Folgenden eine mittels physikalischer Aufbauten und Messungen durchgeführte Methode gemeint sein. Unter "digital" kann hierbei und im Folgenden eine rechnerische und/oder auf Simulationen basierte Methode gemeint sein. Bei einer digitalen Umsetzung kann das Verfahren linear und/oder rein analytisch sein. Mit anderen Worten, das digitale Verfahren kann lediglich die, insbesondere analytische, Lösung von linearen Gleichungen erfordern.

Im Folgenden kann ein "Feld" einem Strahlenbündel entsprechen. Ein "Strahlenbündel" kann hierbei und im Folgenden mit einem, insbesondere elektromagnetischem, Vektorfeld beschrieben werden, das entlang einer Ausbreitungsrichtung propagiert. Alternativ ist es möglich, dass es sich bei dem Vektorfeld um ein Teilchenfeld, wie beispielsweise ein Neutronenfeld, handelt. Beispielsweise handelt es sich bei einem Strahlenbündel um ein Gauß'sches Strahlenbündel. Quer, insbesondere senkrecht, zum Strahlenbündel weist dieses einen zweidimensionalen Querschnitt auf. Hierbei und im Folgenden kann eine z-Richtung im Raum die Ausbreitungsrichtung sein, während der Querschnitt durch die x- und die y-Richtung aufgespannt werden kann. Ein Strahlenbündel kann aus Strahlen aufgebaut sein, wobei jeder Strahl im mathematischen Sinne die Propagation eines Punktes des Querschnitts entlang der Ausbreitungsrichtung beschreibt.

Bei einem Strahlenbündel kann es sich auch um ein digitales Strahlenbündel handeln, wobei korrespondierende physikalische Eigenschaften eines physikalischen Strahlenbündels bei dem digitalen Strahlenbündel durch Simulationen und/oder Berechnungen erreicht werden können.

Ein Strahlenbündel kann eine, insbesondere komplexe, Amplitude aufweisen, deren Betragsquadrat einer Intensität entspricht. Für die komplexe Amplitude A kann gelten: $A=|A|\cdot\exp(i\chi)$, wobei $|A|$ der Betrag der komplexen Amplitude und $\chi$ eine Phase ist. Im Folgenden wird, soweit nicht explizit anders vermerkt, unter dem Begriff "Amplitude" der Betrag der komplexen Amplitude verstanden. Die komplexe Amplitude kann allgemein eine Funktion des Ortes sein. Die komplexe Amplitude, und damit die Intensität und/oder die Phase, können entlang des Strahlenbündels, insbesondere entlang des Querschnitts des Strahlenbündels, variieren. Es ist ferner möglich, dass die komplexe Amplitude entlang der Ausbreitungsrichtung des Strahlenbündels variiert. Mit anderen Worten, an einem festen Punkt entlang der Ausbreitungsrichtung weist das Strahlenbündel im Querschnitt eine zweidimensionale komplexe Amplitude bzw. eine zweidimensionale Intensität und Phase auf. Es kann möglich sein, bei bekannter komplexer Amplitude auf einem Querschnitt, die komplexe Amplitude für einen weiteren Querschnitt zu berechnen. Beispielsweise kann dies mittels der Lösung der Helmholtz-Gleichung und/oder der Propagationstheorien nach Huygens, Rayleigh und Sommerfeld erfolgen. Dieses Verfahren wird Propagation genannt. Die mathematische Darstellung der Propagation kann über eine Propagatorabbildung erfolgen.

Beispielsweise kann das das Strahlenbündel beschreibende Vektorfeld in einen Amplitudenterm und einen Phasenterm aufgeteilt werden. Ferner weist ein Strahlenbündel wenigstens eine Frequenz auf, die eine zeitliche Oszillation des Strahlenbündels beschreibt. Die Frequenz kann einer Wellenlänge der Strahlen des Strahlenbündels entsprechen. Es ist insbesondere möglich, dass ein Strahlenbündel eine Vielzahl von Frequenzen aufweist. Beispielsweise handelt es sich bei dem Strahlenbündel dann um ein polychromatisches Feld.

Gemäß zumindest einer Ausführungsform des Verfahrens wird ein Eingangsstrahlenbündel mit einer Phase bereitgestellt. Das Eingangsstrahlenbündel umfasst eine Vielzahl von Eingangsstrahlen, die jeweils eine Phase aufweisen. Hierbei und im Folgenden kann die Phase des Eingangsstrahlenbündels die Menge aller Phasen der Eingangsstrahlen sein. Alternativ kann die Phase des Eingangsstrahlenbündels lediglich einen Teil der Phasen der Eingangsstrahlen umfassen. Das Eingangsstrahlenbündel kann zudem einen Zentralstrahl aufweisen, der eine Symmetrieachse des Eingangsstrahlenbündels bilden kann. Beispielsweise handelt es sich bei dem Eingangsstrahlenbündel um ein, insbesondere elektromagnetisches, Vektorfeld bzw. das Eingangsstrahlenbündel ist mit einem Vektorfeld beschreibbar. Das Eingangsstrahlenbündel kann räumlich kohärent und/oder quasi-kohärent ausgebildet sein. Es ist möglich, dass das Eingangsstrahlenbündel monochromatisches oder polychromatisches Laserlicht enthält oder daraus gebildet ist. Monochromatisches Laserlicht kann eine einzige Zentralfrequenz aufweisen, bei der eine Intensität des Laserlichts maximal ist. Polychromatisches Laserlicht kann eine Vielzahl von Maxima der Intensität und/oder Plateau in der Intensität aufweisen. Beispielsweise kann zur Bereitstellung des Eingangsstrahlenbündels Laserlicht an einem Objekt reflektiert worden sein, wobei der reflektierte Strahl das Eingangsstrahlenbündel bildet. Die Phase kann dann Informationen über eine dreidimensionale Struktur des Objekts enthalten.

Ein "räumlich kohärentes" Feld kann hierbei und im Folgenden die Eigenschaft aufweisen, dass für zwei beliebige Punkte einer Eingangsfläche das Feld zu einer ersten Zeit t eine gegenseitige Interferenz und/oder eine gegenseitige Kohärenz bzw. Korrelation mit einem Feld zu einer zweiten Zeit t' eine gegenseitige Interferenz zeigen kann. Beispielsweise ist es möglich, diese Interferenz und/oder Kohärenz durch Variation der ersten Zeit und der zweiten Zeit mittels einer Überlappung der Felder zu den zwei Zeiten in einem Interferometer zu messen. Die Differenz der ersten Zeit und der zweiten Zeit kann unterschiedlichen Laufzeiten des Feldes von der Quelle zum Interferenzpunkt auf der Eingangsfläche entsprechen.

Gemäß zumindest einer Ausführungsform des Verfahrens wird ein Interferometersystem bereitgestellt. Das Interferometersystem umfasst ein Optiksystem mit einem Strahlteiler und einem Strahlkombinierer. Das Optiksystem kann weitere optische Komponenten, wie beispielsweise Linsen, Spiegel, diffraktive, also beugende, optische Elemente (DOE) und/oder Verzögerungsplatten, aufweisen oder aus einer solchen optischen Komponente bestehen. Bei einem diffraktiven optischen Element kann eine Zusammenführung zweier Strahlenbündel über verschiedene Beugungsordnungen und/oder Moden erfolgen. Der Strahlteiler kann insbesondere eine gekrümmte Oberfläche aufweisen. Bei dem Strahlteiler und/oder dem Strahlkombinierer kann es sich beispielsweise um einen 90/10- oder um einen 50/50-Strahlteiler handeln. Das Optiksystem ist zur Bereitstellung eines ersten Interferometerarms und eines zweiten Interferometerarms eingerichtet. Bevorzugt entsprechen die Ausgänge des Strahlteilers jeweils einem der Interferometerarme. Jeder Interferometerarm kann weitere optische Elemente aufweisen. Die beiden Interferometerarme können räumlich überlappen.

Das Interferometersystem umfasst ferner eine Detektionsfläche. Bei der Detektionsfläche kann es sich um einen Teil einer Detektorebene eines Detektors handeln. Insbesondere handelt es sich bei der Detektionsfläche um den Teil der Detektorebene, der in das Verfahren miteinbezogen wird. Der Detektor ist bevorzugt dazu eingerichtet, die Intensität eines eingehenden Strahlenbündels bzw. eines eingehenden Feldes zu messen und in ein Messsignal, beispielsweise eine Spannung und/oder einen Strom, umzuwandeln. Bevorzugt wird die Intensität ortsaufgelöst gemessen. Mit anderen Worten, der Detektor kann dazu eingerichtet sein, die Intensität eines Strahlenbündels in zwei Dimensionen zu messen. Dieses Intensitätsmuster bzw. Intensitätsbild wird Interferogramm genannt. Der Detektor bzw. die Detektionsfläche kann eine physikalische Vorrichtung zum Messen und/oder Speichern der gemessenen Bilder sein. Beispielsweise enthält die Detektionsfläche bzw. der Detektor einen photographischen Film und/oder eine holographische Registriervorrichtung. Hierdurch kann es möglich sein, physikalisch ein Hologramm zu erzeugen. Im Falle der digitalen Auswertung der Interferogramme kann die Erzeugung der Hologramme ebenfalls digital erfolgen.

Ferner kann der Detektor dazu eingerichtet sein, die Intensitäten spektral aufgelöst zu messen. Das Messsignal kann einer, insbesondere spektralen, Fourier-Transformierten des Interferenzstrahlenbündels entsprechen. Bevorzugt ist der Detektor bzw. die Detektionsfläche derart ausgebildet, dass auch Randbereiche eines einfallenden Strahlenbündels gemessen werden.

Die Detektionsfläche kann Pixel mit einer Pixelrasterung, die einer Indizierung der Pixel entsprechen kann, aufweisen. Beispielsweise weist die Detektionsfläche horizontale Pixel, die mit einem ersten Index indiziert werden, und vertikale Pixel, die mit einem zweiten Index indiziert werden, auf. Der Detektor kann einen CCD-Sensor, einen CMOS-Sensor und/oder einen aktiven Pixelsensor (Engl.: active-pixel sensor (APS)) aufweisen. Bevorzugt weist der Detektor zweidimensionale Anordnungen bzw. Arrays der genannten Sensoren auf. Die Detektionsfläche kann als Messpunkte insbesondere Pixel aufweisen.

Gemäß zumindest einer Ausführungsform des Verfahrens umfasst dieses ein Aufteilen des Eingangsstrahlenbündels in ein Hauptstrahlenbündel und ein Vergleichsstrahlenbündel unter Verwendung des Strahlteilers. Das Aufteilen erfolgt derart, dass jeder Eingangsstrahl in einen Hauptstrahl des Hauptstrahlenbündels und einen Vergleichsstrahl des Vergleichsstrahlenbündels aufgeteilt wird. Hierbei ist jedem Eingangsstrahl ein Hauptstrahl und ein Vergleichsstrahl eindeutig zugeordnet. Ferner kann jedem Hauptstrahl und jedem Vergleichsstrahl ein Eingangsstrahl eindeutig zugeordnet sein. Jeder Hauptstrahl und jeder Vergleichsstrahl kann jeweils eine Phase aufweisen. Die Phase jedes Hauptstrahls und die Phase jedes Vergleichsstrahls kann der Phase des dem Hauptstrahl und dem Vergleichsstrahl zugeordneten Eingangsstrahls entsprechen.

Gemäß zumindest einer Ausführungsform des Verfahrens umfasst dieses eine Propagation des Hauptstrahlenbündels entlang des ersten Interferometerarms und des Vergleichsstrahlenbündels entlang des zweiten Interferometerarms. Nach der Propagation durch den ersten Interferometerarm bzw. den zweiten Interferometerarm liegen das Hauptstrahlenbündel und das Vergleichsstrahlenbündel als propagiertes Hauptstrahlenbündel und propagiertes Vergleichsstrahlenbündel vor. Die Propagation entlang der beiden Interferometerarme kann unterschiedlich sein. Beispielsweise weist das propagierte Hauptstrahlenbündel bzw. das propagierte Vergleichsstrahlenbündel im Vergleich zu dem Hauptstrahlenbündel bzw. dem Vergleichsstrahlenbündel einen Phasenversatz, eine Drehung, eine Amplitudenreduktion und/oder eine allgemeine optische Abbildung, wie beispielsweise eine Kollimation, auf. Dies kann durch Bereitstellung unterschiedlich ausgebildeter Interferometerarme ermöglicht werden.

Der erste Interferometerarm kann zumindest ein erstes optisches Element aufweisen. Ferner kann der zweite Interferometerarm zumindest ein zweites optisches Element aufweisen. Das zumindest eine erste und das zumindest eine zweite optische Element können Teil des Optiksystems sein. Ein optisches Element ist hierbei und im Folgenden eine Komponente des Optiksystems, die eine Veränderung des Hauptstrahlenbündels bzw. des Vergleichsstrahlenbündels bewirkt. Es kann erforderlich sein, dass die optischen Elemente derart ausgebildet sind, dass das propagierte Hauptstrahlenbündel und das propagierte Vergleichsstrahlenbündel nicht identisch sind und/oder bis auf eine globale Phase nicht identisch sind.

Der erste Interferometerarm kann eine erste optische Weglänge und der zweite Interferometerarm eine zweite optische Weglänge, die von der ersten optischen Weglänge verschieden ist, aufweisen. Eine optische Weglänge entlang einem der Interferometerarme kann hierbei und im Folgenden, insbesondere für die Bestimmung einer Propagatorabbildung, als optisches Element angesehen werden. Beispielsweise weist zumindest einer der beiden Interferometerarme ein Dove-Prisma, zumindest eine Linse, einen Konkav-/Konvexspiegel und/oder ein diffraktives optisches Element auf. Die optischen Elemente können miteinander kombiniert werden. Beispielsweise können bei einigen Ausführungsformen des Verfahrens die beiden Interferometerarme unterschiedlich lang ausgebildet sein und unterschiedliche Linsen und/oder eine unterschiedliche Anzahl von Linsen aufweisen.

Gemäß zumindest einer Ausführungsform des Verfahrens umfasst dieses ein Überlagern des propagierten Hauptstrahlenbündels und des propagierten Vergleichsstrahlenbündels zu einem Interferenzstrahlenbündel. Das Überlagern erfolgt unter Verwendung des Strahlkombinierers. Bei dem Strahlkombinierer kann es sich beispielsweise um ein Prisma, einen teilreflektierenden Spiegel und/oder um einen dichroitischen Strahlkombinierer handeln. Der Strahlkombinierer kann beispielsweise eine gekrümmte Oberfläche haben. Ferner kann der Strahlkombinierer ein diffraktives optisches Elemente enthalten oder ein diffraktives optisches Element sein. Der Strahlkombinierer kann so ausgeführt sein, dass das propagierte Hauptstrahlenbündel und das propagierte Vergleichsstrahlenbündel über einen schiefen Einfall, der von 90° verschieden sein kann, auf einer gemeinsamen Fläche, beispielsweise der Detektionsfläche, zur Interferenz kommen.

Das Interferenzstrahlenbündel umfasst eine Vielzahl von Interferenzstrahlen. Ein Interferenzstrahl ist eine, insbesondere punktweise, Überlagerung eines Hauptstrahls des propagierten Hauptstrahlenbündels und eines Vergleichsstrahls des propagierten Vergleichsstrahlenbündels. Hierbei und im Folgenden kann mit einer "Überlagerung" von wenigstens zwei Strahlen gemeint sein, dass die Strahlen in einem Raumgebiet überlappen, wobei die Strahlen unterschiedliche Ausbreitungsrichtungen aufweisen können. Ferner kann mit einer "punktweisen Überlagerung" hierbei und im Folgenden gemeint sein, dass die überlagerten Strahlen an einem Punkt, bei dem es sich um das Raumgebiet handeln kann, zur Interferenz kommen.

In einer bevorzugten Ausführungsform erfolgt die Propagation des Hauptstrahlenbündels entlang des ersten Interferometerarms und des Vergleichsstrahlenbündels entlang des zweiten Interferometerarms derart, dass zumindest ein Teil der Interferenzstrahlen des Interferenzstrahlenbündels jeweils eine Überlagerung eines einem ersten Eingangsstrahl des Eingangsstrahlenbündels zugeordneten Hauptstrahls des propagierten Hauptstrahlenbündels und eines einem zweiten, von dem ersten Eingangsstrahl verschiedenen, Eingangsstrahl des Eingangsstrahlenbündels zugeordneten Vergleichsstrahls des propagierten Vergleichsstrahlenbündels ist. Bevorzugt erfolgt die Propagation derart, dass fast jeder, besonders bevorzugt jeder, Interferenzstrahl jeweils eine Überlagerung eines einem ersten Eingangsstrahl des Eingangsstrahlenbündels zugeordneten Hauptstrahls des propagierten Hauptstrahlenbündels und eines einem zweiten, von dem ersten Eingangsstrahl verschiedenen, Eingangsstrahls des Eingangsstrahlenbündels zugeordneten Vergleichsstrahls des propagierten Vergleichsstrahlenbündels ist.

Hierbei und im Folgenden kann "fast jeder" insbesondere bedeuten, dass es sowohl Strahlen gibt die die Eigenschaft haben, wie auch Strahlen die die Eigenschaft nicht haben. Insbesondere bedeutet "fast jeder", dass wenigstens 70%, bevorzugt wenigstens 80%, der Interferenzstrahlen die oben genannte Eigenschaft haben, jeweils eine Überlagerung eines einem ersten Eingangsstrahl zugeordneten Hauptstrahls und eines einem zweiten Eingangsstrahl zugeordneten Vergleichsstrahls zu sein.

Insbesondere können alle Interferenzstrahlen, mit Ausnahme eines einzigen Interferenzstrahls, die besagte Eigenschaft aufweisen. Bei diesem einzigen Interferenzstrahl kann es sich um einen Zentralstrahl des Interferenzstrahlenbündels handeln, der insbesondere nicht aus den Eingangsstrahlen erzeugt wird.

Die Propagation kann somit derart erfolgen, dass fast jeder Interferenzstrahl eine Überlagerung aus je zwei Strahlen zweier unterschiedlicher Eingangsstrahlen ist. Dies kann beispielsweise durch eine Drehung und/oder Verschiebung zumindest eines Teils des Vergleichsstrahlenbündels im Vergleich zu dem Hauptstrahlenbündel erfolgen.

Insbesondere in dem Fall, in dem lediglich ein Teil der Interferenzstrahlen die zuvor genannte Eigenschaft aufweisen ist es möglich, dass ein weiterer Teil der Interferenzstrahlen, bevorzugt alle übrigen Interferenzstrahlen, des Interferenzstrahlenbündels eine Überlagerung eines einem ersten Eingangsstrahl des Eingangsstrahlenbündels zugeordneten Hauptstrahls des propagierten Hauptstrahlenbündels und eines einem zweiten, mit dem ersten Eingangsstrahl identischen, Eingangsstrahl des Eingangsstrahlenbündels zugeordneten Vergleichsstrahls des propagierten Vergleichsstrahlenbündels ist. Beispielsweise weist fast jeder Interferenzstrahl die Eigenschaft auf, eine Überlagerung aus unterschiedlichen Eingangsstrahlen zu sein und die restlichen Interferenzstrahlen weisen die Eigenschaft auf, eine Überlagerung gleicher Eingangsstrahlen zu sein.

Bevorzugt ist jedem Interferenzstrahl ein Hauptstrahl und ein Vergleichsstrahl eineindeutig zugeordnet. Der Hauptstrahl ist einem ersten, insbesondere beliebigen, Eingangsstrahl des Eingangsstrahlenbündels zugeordnet. Der Vergleichsstrahl ist einem zweiten Eingangsstrahl des Eingangsstrahlenbündels zugeordnet, der insbesondere vom ersten Eingangsstrahl verschieden ist. Das Interferenzstrahlenbündel kann ferner einen einzigen Zentralstrahl aufweisen, der eine, insbesondere punktweise, Überlagerung eines einzigen Zentralstrahls des propagierten Hauptstrahlenbündels und eines einzigen Zentralstrahls des propagierten Vergleichsstrahlenbündels ist, die jeweils einem einzigen Zentralstrahl des Eingangsstrahlenbündels zugeordnet sind. Mit anderen Worten, der Zentralstrahl des Eingangsstrahlenbündels, der insbesondere nicht Teil der Eingangsstrahlen ist, wird mittels des Optiksystems auf sich selbst abgebildet.

Insbesondere weist der erste Eingangsstrahl eine erste Phase und der zweite Eingangsstrahl eine zweite Phase auf. Der dem ersten Eingangsstrahl zugehörige Hauptstrahl kann ebenfalls die erste Phase aufweisen. Ferner kann der dem zweiten Eingangsstrahl zugehörige Vergleichsstrahl die zweite Phase aufweisen. Die erste Phase kann von der zweiten Phase verschieden sein. Mit anderen Worten, bei dem hier beschriebenen Verfahren wird das Eingangsstrahlenbündel zunächst in zwei Strahlenbündel (das Hauptstrahlenbündel und das Vergleichsstrahlenbündel) aufgeteilt, wobei die beiden Strahlenbündel anschließend derart überlagert werden, dass unterschiedliche Eingangsstrahlen mit unterschiedlichen Phasen interferieren.

Gemäß zumindest einer Ausführungsform des Verfahrens wird ein Hologramm erzeugt. Hierzu wird das Interferenzstrahlenbündel auf die Detektionsfläche propagiert. Mit anderen Worten, die Detektionsfläche wird mit dem Interferenzstrahlenbündel bestrahlt. Insbesondere wird ein Interferenzmuster auf der Detektionsfläche erzeugt. Durch Messen des Interferenzmusters kann zumindest ein Interferogramm erzeugt werden oder das Interferenzmuster entspricht zumindest einem Interferogramm. Das Hologramm ist mit dem zumindest einen Interferogramm gebildet.

Gemäß zumindest einer Ausführungsform des Verfahrens umfasst dieses ein Bestimmen einer Propagatorabbildung des Optiksystems. Die Propagatorabbildung beschreibt eine Propagation des propagierten Hauptstrahlenbündels in das propagierte Vergleichsstrahlenbündel. Mit anderen Worten, die Propagatorabbildung entspricht einer Rückpropagation des propagierten Hauptstrahlenbündels in ein rückpropagiertes Hauptstrahlenbündel und anschließend in ein rückpropagiertes Eingangsstrahlenbündel und einer anschließenden Propagation des rückpropagierten Eingangsstrahlenbündels in das Vergleichsstrahlenbündel und anschließend in das propagierte Vergleichsstrahlenbündel. Bei dem rückpropagierten Hauptstrahlenbündel und dem rückpropagierten Eingangsstrahlenbündel handelt es sich bevorzugt um das Hauptstrahlenbündel und das Eingangsstrahlenbündel. Die Propagatorabbildung beschreibt insbesondere die Veränderung des Eingangsstrahlenbündels durch zumindest einen Teil des Optiksystems.

Insbesondere kann die Propagatorabbildung eine bijektive Abbildung darstellen, die näherungsweise unitär sein kann. Diese Eigenschaft kann beispielsweise dadurch erreicht werden, indem die zulässigen Eingangsstrahlenbündel auf solche Strahlenbündel beschränkt werden, die das Interferometer ohne Abschattungen (sogenannte "Vignettierung") passieren. Eine Vignettierung ist hierbei und im Folgenden eine seitliche Abschattung und/oder Blockierung eines Strahlenbündels. Hierfür passende Optiksysteme, bei denen wesentliche Vignettierungen vermieden werden, sind beispielsweise im Zusammenhang mit den Figuren erläutert.

Beispielsweise kann die Propagatorabbildung mit einer Propagatormatrix dargestellt werden. Die Propagatorabbildung kann, vereinfacht, mittels der Formel E2=U·E1 ausgedrückt werden, wobei U die Propagatormatrix ist, E1 das propagierte Hauptstrahlenbündel, also das Feld im ersten Interferometerarm, ist und E2 das propagierte Vergleichsstrahlenbündel, also das Feld im zweiten Interferometerarm, ist.

Die Propagatormatrix kann insbesondere invertierbar ausgebildet sein. Eine invertierbare Matrix ist hierbei und im Folgenden eine Matrix, deren inverse Matrix mittels analytischer und/oder numerischer Methoden ermittelt werden kann. Beispielsweise gibt ein Element der Propagatormatrix im Ortsraum an, wie für eine gegebene Pixelrasterung der Detektionsfläche das Hauptstrahlenbündel Pixel der Detektionsfläche mit einem ersten Index u und einem zweiten Index v zu dem Vergleichsstrahlenbündel an einem Pixel der Detektionsfläche mit dem ersten Index m und dem zweiten Index n transformiert wird, wobei u und m sowie v und n unterschiedliche Werte haben.

Es ist möglich, dass das Bereitstellen des Optiksystems und das Ermitteln der Propagatorabbildung in mehreren kumulativen Schritten erfolgen. Insbesondere kann es erforderlich sein, das Optiksystem derart bereitzustellen, dass die Propagation durch das Optiksystem mit einer invertierbaren Propagatormatrix beschreibbar ist. Für die praktische Anwendbarkeit kann es ferner erforderlich sein, dass sich die Propagatormatrix stark von der Einheitsmatrix unterscheidet, da es möglich ist, dass sich eine nicht hinreichend von der Einheitsmatrix abweichende Propagatormatrix aufgrund von Störungen und endlicher Quantisierungsgenauigkeiten der Auswerteeinheit (z.B. 8Bit, 10Bit, 12Bit, 14Bit, 16Bit) wie eine Einheitsmatrix verhält, bzw. zu einem in der Lösung unbestimmten Problem führt.

Zur Bestimmung der Propagatorabbildung kann eine Lösung der Helmholtz-Gleichung und/oder ein Beugungspropagator nach Huygens, Rayleigh oder Sommerfeld verwendet werden. Komplexe Einbauten in den Interferometerarmen können nach den Methoden der Fourier-Optik in der Propagatorabbildung berücksichtigt werden. Beispielsweise sind Prismen, Linsen, oder auch diffraktive, also beugende, optische Elemente (DOE) mit der Propagatorabbildung beschreibbar. Möglichkeiten zur Ermittlung der Propagatorabbildung sind beispielsweise in den Druckschriften "Fourier Optics and Imaging (Kapitel 9; Okan K. Ersoy, Wiley-Intersience 2007) und "Introduction to Fourier Optics" (Kapitel 5; Joseph W. Goodman, McGraw Hill 1998, 2. Auflage) beschrieben. Eine ausführliche Beschreibung der Modellierung der Propagatorabbildung folgt im weiteren Verlauf dieser Anmeldung.

Eine Erkenntnis der Erfindung ist mitunter, dass eine Propagatorabbildung bereitgestellt werden kann, die die Bestimmung der Phasen auf ein lineares Problem für das Feld des Hauptstrahlenbündels zurückführt. Eine Voraussetzung hierfür ist die Kenntnis des Hologramms und eine Methode zum Auslesen des Hologramms. Ferner können die Amplituden des Hauptstrahlenbündels und des Vergleichsstrahlenbündels aus unabhängigen Messungen bekannt sein. Der Zusammenhang zwischen dem Hauptstrahlenbündel und dem Vergleichsstrahlenbündel wird durch die Propagatorabbildung beschrieben, die eine Eigenschaft des Interferometers ist. Die beiden zur Interferenz kommenden Strahlungsfelder, also das Hauptstrahlenbündel und das Vergleichsstrahlenbündel, sind somit nicht unabhängig voneinander.

Gemäß zumindest einer Ausführungsform des Verfahrens umfasst dieses ein Bereitstellen eines Teststrahlenbündels. Das Teststrahlenbündel kann ein physikalisches Strahlenbündel, beispielsweise ein Gauß'sches Strahlenbündel sein. Alternativ oder zusätzlich ist es möglich, dass das Teststrahlenbündel zumindest teilweise digital ausgebildet ist. Bevorzugt ist das Teststrahlenbündel vollständig digital ausgebildet. Beispielsweise handelt es sich bei dem Teststrahlenbündel dann um zumindest einen Teil einer Lösung eines Gleichungssystems. Das Teststrahlenbündel weist eine Testphase auf. Die Testphase ist bevorzugt bekannt. Ferner umfasst das Verfahren ein Auslesen des Hologramms mit zumindest einem Teil des Teststrahlenbündels zur Erzeugung eines ersten Strahlenbündels und ein Anwenden der Propagationsabbildung auf zumindest einen Teil des Teststrahlenbündels zur Erzeugung eines zweiten Strahlenbündels. Der jeweilige Teil des Teststrahlenbündels kann beispielsweise durch ein Aufteilen des Teststrahlenbündels in einen ersten und einen zweiten Teil mittels eines Strahlteilers bereitgestellt werden. Das Anwenden der Propagationsabbildung kann physikalisch erfolgen. Bevorzugt erfolgt das Anwenden der Propagationsabbildung digital, also durch Rechnungen und/oder Simulationen. "Auslesen eines Hologramms" bedeutet hierbei und im Folgenden, dass aus einem gegebenen Strahlenbündel durch physikalische und/oder digitale Streuung an dem Hologramm ein neues Strahlenbündel, vorliegend das erste Strahlenbündel, erzeugt wird. Es ist bevorzugt möglich, durch ein Auslesen mit dem Teststrahlenbündel aus dem Hauptstrahlenbündel das Vergleichsstrahlenbündel zu erzeugen.

Die Auslesemethode kann in einem engen Zusammenhang zur Erzeugung des Hologramms stehen. Beispielsweise kann das Hologramm ausschließlich als Intensitätsbild eines Interferogramms erzeugt werden. In diesem Fall kann das Hologramm alle Terme eines Intensitätsfeldes des Interferenzstrahlenbündels enthalten. Hierbei kann es erforderlich sein, dass die Auslesung dazu geeignet ist, ungewollte physikalische "Geister"-Bilder zu unterdrücken. Bei derartigen "Geister"-Bildern, die auch mit dem Begriff "twin problem" bezeichnet werden, kann es sich um, meist ungewollte, doppelte Bilder bei Holographie-Anwendungen handeln. Die Auslesung kann auch ein digitaler Vorgang sein, beispielsweise wenn die Erzeugung des Hologramms digital erfolgt.

Gemäß zumindest einer Ausführungsform des Verfahrens erfolgt die Propagation des Hauptstrahlenbündels entlang des ersten Interferometerarms und des Vergleichsstrahlenbündels entlang des zweiten Interferometerarms (entsprechend Schritt d)) derart, dass ein Interferenzstrahl, insbesondere genau ein Interferenzstrahl, des Interferenzstrahlenbündels eine Überlagerung eines einem ersten Eingangsstrahl des Eingangsstrahlenbündels zugeordneten Hauptstrahls des propagierten Hauptstrahlenbündels und eines einem zweiten, mit dem ersten Eingangsstrahl identischen, Eingangsstrahl des Eingangsstrahlenbündels zugeordneten Vergleichsstrahls des propagierten Vergleichsstrahlenbündels ist. Ein Interferenzstrahl, insbesondere genau ein Interferenzstrahl ist also eine Überlagerung aus zwei Strahlen, die einem identischen Eingangsstrahl zugeordnet sind. Bei diesem Strahl handelt es sich insbesondere um den Zentralstrahl des Interferenstrahlenbündels. Die übrigen Interferenzstrahlen können alle eine Überlagerung zweier Strahlen, die unterschiedlichen Eingangsstrahlen zugeordnet sind, sein.

Gemäß zumindest einer Ausführungsform des Verfahrens umfasst dieses einen Vergleich des ersten Strahlenbündels und des zweiten Strahlenbündels. Insbesondere werden die Phasen der beiden Strahlenbündel verglichen. Das Bereitstellen des, insbesondere beliebigen, Teststrahlenbündels, das Erzeugen des ersten und des zweiten Strahlenbündels und der Vergleich zwischen dem ersten und dem zweiten Strahlenbündel werden solange wiederholt, bis das erste Strahlenbündel und das zweite Strahlenbündel, mit Ausnahme örtlicher Intensitätsunterschiede und/oder einer globalen Phase, im Wesentlichen identisch sind. Die globale Phase ist bevorzugt eine ortsunabhängige Größe. Mit anderen Worten, die Schritte werden solange wiederholt bis eine Auswertung bzw. ein Auslesen des Hologramms mit dem phasenbehafteten Teststrahlenbündel zum gleichen Ergebnis wie die Propagation des Teststrahlenbündels mittels der Propagatorabbildung führt.

Das Wiederholen der Schritte kann einem analytischen und/oder numerischen Lösen einer Eigenwertgleichung entsprechen. "Im Wesentlichen identisch" bedeutet hierbei, dass Unterschiede zwischen den beiden Strahlenbündeln im Rahmen der Herstellungstoleranzen, beispielsweise durch leichte Abweichungen bei der Strahlpropagation und/oder Ungenauigkeiten bei einer Berechnung, möglich sind. Die Identität der beiden Strahlenbündel ist somit nicht im mathematisch strengen Sinn zu verstehen. Die örtlichen Intensitätsunterschiede entsprechen bevorzugt der Intensität des Hauptstrahlenbündels und/oder des Vergleichsstrahlenbündels. Ergibt der Vergleich, dass die beiden Strahlenbündel, mit Ausnahme von Intensitätsunterschieden und einer ortsunabhängigen globalen Phase, identisch sind, so ist die Phase des Teststrahlenbündels im Rahmen der Messgenauigkeit gleich der Phase des Hauptstrahlenbündels und/oder des Vergleichsstrahlenbündels auf der Detektionsfläche. Die globale Phase entspricht dem Phasenanpassungsfaktor. Die Phasengleichheit des Teststrahlenbündels mit dem Hauptstrahlenbündel bzw. dem Vergleichsstrahlenbündel kann bis auf eine willkürliche ortsunabhängige Konstante gelten.

Das Teststrahlenbündel kann also variiert werden, mit der Zielsetzung, ein Teststrahlenbündel als Lösungsbündel zu finden, das die Phase des Hauptstrahlenbündels und/oder des Vergleichsstrahlenbündels bzw. des Eingangsstrahlenbündels aufweist. Das Bereitstellen des Teststrahlenbündels, das Erzeugen des ersten und des zweiten Strahlenbündels und das Vergleichen der beiden Strahlenbündel kann zumindest teilweise mit einer Auswerteeinheit durchgeführt werden. Die Auswerteeinheit kann eine Speichereinheit und eine Prozessoreinheit aufweisen. Beispielsweise beinhaltet die Auswerteeinheit einen Computer oder ist ein Computer. Es ist möglich, dass das Teststrahlenbündel in der Auswerteeinheit erzeugt und propagiert wird. Alternativ oder zusätzlich kann die Auswerteeinheit ein physikalisches System zur Erzeugung des, insbesondere physikalischen, Teststrahlenbündels sowie optische Komponenten beinhalten. Die Propagatorabbildung kann in der Auswerteeinheit gespeichert sein und/oder mit optischen Komponenten realisiert sein.

Gemäß zumindest einer Ausführungsform des Verfahrens umfasst dieses das Ermitteln zumindest eines Teils der Phasen des Eingangsstrahlenbündels bzw. zumindest eines Teils der Phasen der Eingangsstrahlen aus der Testphase des Teststrahlenbündels. Das Ermitteln kann einen Abgleich zwischen dem Ergebnis der Propagation des Teststrahlenbündels und der Auslesung des Hologramms mittels des Teststrahlenbündels beinhalten. Beispielsweise entspricht die Phase des Eingangsstrahlenbündels der Testphase.

Gemäß zumindest einer Ausführungsform ist das Verfahren frei von der Verwendung eines Referenzstrahls. Ein Referenzstrahl ist hierbei und im Folgenden ein Strahl, der eine feste Phasenbeziehung aufweist. Während der Ausgangsstrahl beispielsweise an einem Objekt reflektiert und/oder gebeugt wird, wird ein Referenzstrahl nicht an einem Objekt reflektiert und/oder gebeugt und weist somit keine variable Phase, wie die Eingangsstrahlen, auf. Bei dem vorliegenden Verfahren werden vielmehr unterschiedliche Eingangsstrahlen des Eingangsstrahlenbündels miteinander überlagert um die Phasen der Eingangsstrahlen zu ermitteln. Die überlagerten Strahlen stehen also in einem Zusammenhang, da sie aus dem gleichen Eingangsstrahlenbündel vor dem Strahlteiler herrühren.

Es ist ferner möglich, dass bei dem Verfahren weitere Strahlenbündel zum Einsatz kommen. Insbesondere können unter Verwendung weiterer Strahlteiler und/oder eines mehrfach durchlaufenen Strahlteilers mehr als zwei Strahlenbündel zu dem Interferenzstrahlenbündel überlagert werden. Damit können auch Interferometersysteme, bei denen mehr als zwei Strahlenbündel verwendet werden, in Verbindung mit dem Verfahren verwendet werden. Aufgrund der Linearität der Feldgleichungen können hierzu beispielsweise mehrere Strahlenbündel zu, insbesondere zwei, Gruppen zusammengefasst werden, wobei das Verfahren auf die jeweiligen Gruppen angewandt wird.

Gemäß zumindest einer Ausführungsform des Verfahrens umfasst dieses die folgenden Schritte:

a) Bereitstellen eines Eingangsstrahlenbündels mit einer Vielzahl von Eingangsstrahlen, die jeweils eine Phase aufweisen;

b) Bereitstellen eines Interferometersystems umfassend eine Detektionsfläche und ein Optiksystem zur Bereitstellung eines ersten Interferometerarms und eines zweiten Interferometerarms, aufweisend zumindest einen Strahlteiler und einen Strahlkombinierer;

c) Aufteilen des Eingangsstrahlenbündels in ein Hauptstrahlenbündel und ein Vergleichsstrahlenbündel mit dem Strahlteiler derart, dass jeder Eingangsstrahl in einen Hauptstrahl des Hauptstrahlenbündels und einen Vergleichsstrahl des Vergleichsstrahlenbündels aufgeteilt wird, wobei jedem Eingangsstrahl ein Hauptstrahl und ein Vergleichsstrahl eindeutig zugeordnet ist;

d) Propagieren des Hauptstrahlenbündels entlang des ersten Interferometerarms und des Vergleichsstrahlenbündels entlang des zweiten Interferometerarms;

e) Überlagern des propagierten Hauptstrahlenbündels und des propagierten Vergleichsstrahlenbündels zu einem Interferenzstrahlenbündel mit einer Vielzahl von Interferenzstrahlen unter Verwendung des Strahlkombinierers;

f) Erzeugen eines Hologramms durch Propagation des Interferenzstrahlenbündels auf die Detektionsfläche und Messen zumindest eines Interferenzmusters des Interferenzstrahlenbündels;

g) Bestimmen einer Propagatorabbildung des Optiksystems, wobei die Propagatorabbildung eine Propagation des propagierten Hauptstrahlenbündels in das propagierte Vergleichsstrahlenbündel beschreibt;

h) Bereitstellen eines Teststrahlenbündels mit einer Testphase;

i) Auslesen des Hologramms mit zumindest einem Teil des Teststrahlenbündel zur Erzeugung eines ersten Strahlenbündels und Anwenden der Propagationsabbildung auf zumindest einen Teil des Teststrahlenbündels zur Erzeugung eines zweiten Strahlenbündels;

j) Vergleich des ersten Strahlenbündels und des zweiten Strahlenbündels; und

k) Ermitteln zumindest eines Teils der Phase des Eingangsstrahlenbündels aus der Testphase des Teststrahlenbündels, wobei

- die Schritte h) bis j) solange wiederholt werden, bis das erste Strahlenbündel und das zweite Strahlenbündel, mit Ausnahme örtlicher Intensitätsunterschiede und/oder einer globalen Phase, im Wesentlichen identisch sind,
- die Propagation in Schritt d) derart erfolgt, dass zumindest ein Teil der Interferenzstrahlen des Interferenzstrahlenbündels eine Überlagerung eines einem ersten Eingangsstrahl des Eingangsstrahlenbündels zugeordneten Hauptstrahls des propagierten Hauptstrahlenbündels und eines einem zweiten, von dem ersten Eingangsstrahl verschiedenen, Eingangsstrahl des Eingangsstrahlenbündels zugeordneten Vergleichsstrahls des propagierten Vergleichsstrahlenbündels ist, und
- das Verfahren frei von der Verwendung eines Referenzstrahls ist.

Die Verfahrensschritte können in einer beliebigen Reihenfolge durchgeführt werden.

Gemäß zumindest einer Ausführungsform des Verfahrens ist das Teststrahlenbündel beliebig aus einer Menge von Strahlenbündeln wählbar, wenn diese Strahlenbündel unter Anwendung der Propagationsabbildung zu einem ersten Strahlenbündel propagiert werden. Mit anderen Worten, das Teststrahlenbündel ist derart ausgebildet, dass die Propagationsabbildung das Teststrahlenbündel in ein weiteres Strahlenbündel überführen kann.

Gemäß zumindest einer Ausführungsform des Verfahrens umfassen der erste Interferometerarm und/oder der zweite Interferometerarm des Optiksystems ein Strahlrotationselement. Bei dem Strahlrotationselement kann es sich beispielsweise um ein Dove-Prisma, ein Linsensystem und/oder eine Verzögerungsplatte handeln oder das Strahlrotationselement kann zumindest eine dieser Komponenten umfassen. Das Propagieren des Hauptstrahlenbündels entlang des ersten Interferometerarms umfasst ferner ein Drehen des Hauptstrahlenbündels um eine entlang der Ausbreitungsrichtung verlaufende Drehachse unter Verwendung des Strahlrotationselements. Alternativ oder zusätzlich umfasst das Propagieren des Vergleichsstrahlenbündels entlang des zweiten Interferometerarms ein Drehen des Vergleichsstrahlenbündels um eine entlang der Ausbreitungsrichtung verlaufende Drehachse unter Verwendung des Strahlrotationselements. Die Drehung erfolgt mit einem Drehwinkel. Der Drehwinkel beträgt bevorzugt wenigstens 170° und höchstens 190°, bevorzugt wenigstens 175° und höchstens 185° und besonders bevorzugt 180°. Das Feld vor dem Strahlrotati-

onselement, $E_{ein}(x,y,z,t)$, kann dann beispielsweise in eine gedrehtes Feld $E_{dreh}=E_{ein}(-x,-y,z,t)$ überführt werden. Der Zentralstrahl des Eingangsstrahlenbündels kann hierbei auf sich selbst abgebildet werden.

Es ist möglich, dass die Drehung zu einer relativen Drehung einer Polarisation des Hauptstrahlenbündels und/oder des Vergleichsstrahlenbündels führt. Diese Drehung der Polarisation kann durch eine korrekte vektorielle Betrachtung des Vektorfelds des Hauptstrahlenbündels berücksichtigt werden. Insbesondere ist es möglich, eine Drehung der Polarisation mittels weiterer optischer Elemente, beispielsweise Verzögerungsplättchen, zu kompensieren.

Gemäß zumindest einer Ausführungsform des Verfahrens umfassen der erste Interferometerarm und/oder der zweite Interferometerarm des Optiksystems zumindest eine Linse. Die Linse kann zu einer Drehung des Hauptstrahlenbündels bzw. des Vergleichsstrahlenbündels, beispielsweise um einen Drehwinkel von 180°, um eine entlang der Ausbreitungsrichtung und/oder entlang einer optischen Achse der zumindest einen Linse verlaufenden Drehachse führen. Das Propagieren des Hauptstrahlenbündels bzw. des Vergleichsstrahlenbündels entlang des ersten Interferometerarms bzw. entlang des zweiten Interferometerarms umfasst ein Fokussieren und/oder ein Defokussieren des Hauptstrahlenbündels und/oder des Vergleichsstrahlenbündels mit der zumindest einen Linse.

Gemäß zumindest einer Ausführungsform des Verfahrens weist das Bestimmen der Propagatorabbildung die weiteren Schritte eines Ermittelns einer ersten Propagatorabbildung und eines Ermittelns einer zweiten Propagatorabbildung auf. Die erste Propagatorabbildung beschreibt eine Propagation des Eingangsstrahlenbündels durch den Strahlteiler und entlang des ersten Interferometerarms. Die zweite Propagatorabbildung beschreibt eine Propagation des Eingangsstrahlenbündels durch den Strahlteiler und entlang des zweiten Interferometerarms. Ferner wird die erste Propagatorabbildung, beispielsweise mittels analytischer und/oder numerischer Methoden, invertiert. Das Produkt des Inversen der ersten Propagatorabbildung mit der zweiten Propagatorabbildung dient zur Bestimmung der Propagatorabbildung.

Vereinfacht kann die Propagation mittels der ersten und der zweiten Propagatorabbildung mit den Formeln $E2=U1 \cdot E_{in}$ und $E2=U2 \cdot E_{in}$a ausgedrückt werden, wobei $U1$ eine die erste Propagatorabbildung beschreibende erste Propagatormatrix ist, $U2$ eine die zweite Propagatorabbildung beschreibende zweite Propagatormatrix ist und $E_{in}$ das Eingangsstrahlenbündel, also das Feld vor dem Strahlteiler, ist. Eine ausführliche Beschreibung und Ermittlung der ersten und zweiten Propagatorabbildungen folgt im weiteren Verlauf dieser Anmeldung. Es ist möglich, dass die Propagatorabbildung durch eine Multiplikation des zweiten Propagatorabbildung mit dem Inversen der ersten Propagatorabbildung, also $U=U2 \cdot U1^{-1}$, gegeben ist oder umgekehrt. Hierbei kann insbesondere ausgenutzt werden, dass das Eingangsstrahlenbündel, das Hauptstrahlenbündel und/oder das Vergleichsstrahlenbündel keine Vignettierung aufweist. Hierdurch ist es möglich, dass die beiden Abbildungen durch die erste und die zweite Propagatorabbildung derart kombinierbar sind, dass aus dem Feld des Hauptstrahlenbündels auf der Detektionsfläche das Feld des Vergleichsstrahlenbündels auf der Detektionsfläche berechnet werden kann.

Gemäß zumindest einer Ausführungsform des Verfahrens weist das Interferometersystem ferner eine Strahlquelle auf. Die Strahlquelle ist dazu eingerichtet, ein entlang einer Ausbreitungsrichtung propagierendes Initialstrahlenbündel mit einer Vielzahl von Initialstrahlen zu emittieren. Bei dem Initialstrahlenbündel kann es sich um ein, insbesondere elektromagnetisches, Vektorfeld handeln. Das Initialstrahlenbündel kann dann als Gauß'sches Strahlenbündel ausgebildet sein. Ferner kann es sich bei dem Initialstrahlenbündel um einen, insbesondere kollimierten, Lichtstrahl handeln. Bevorzugt ist das Initialstrahlenbündel kohärent ausgebildet.

Gemäß zumindest einer Ausführungsform des Verfahrens wird ein Objekt mit einer Außenfläche bereitgestellt. Das Objekt wird bevorzugt derart in Bezug auf das Interferometersystem positioniert, dass das Optiksystem dem Objekt in Ausbreitungsrichtung nachgeordnet ist. Ferner ist das Objekt der Strahlquelle in Ausbreitungsrichtung nachgeordnet.

Gemäß zumindest einer Ausführungsform des Verfahrens wird zumindest ein Teil des Objekts mit dem Initialstrahlenbündel bestrahlt. Das Bestrahlen erfolgt derart, dass zumindest ein Teil der Initialstrahlen des Initialstrahlenbündels an Objektpunkten reflektiert wird. Die Objektpunkte sind Teil der Außenfläche des Objekts. Durch die Reflexion wird der Teil der Initialstrahlen in die Vielzahl von Eingangsstrahlen des Eingangsstrahlenbündels überführt. Die Phase jeden Eingangsstrahls entspricht einer Phasenverschiebung in Bezug zu einem dem Eingangsstrahl eindeutig, insbesondere eineindeutig, zugeordneten Initialstrahl des zumindest einen Teils der Initialstrahlen. Mit anderen Worten, bei der Phase handelt es sich bevorzugt um eine Phasenverschiebung des Eingangsstrahls zu dem ihm zugeordneten Initialstrahl. Die Phase jedes Eingangsstrahls enthält insbesondere Informationen zur dreidimensionalen Struktur des Objekts.

Gemäß zumindest einer Ausführungsform des Verfahrens ist die Detektionsfläche dazu eingerichtet, das Hologramm zu speichern. Alternativ oder zusätzlich ist es möglich, dass die Detektionsfläche dazu eingerichtet ist, das Interferogramm des Interferenzmusters zu speichern. Das Hologramm kann aus einem oder mehreren Interferogrammen erzeugt werden. Bei dem gespeicherten Hologramm kann es sich um eine holographische Abbildung des Objekts handeln. Bevorzugt ist der Detektor ein digitaler Detektor, dessen digitales Messsignal in einer Speichereinheit gespeichert wird. Durch Verarbeitung der digitalen Messsignale kann ein digitales Hologramm erzeugt werden.

Alternativ oder zusätzlich kann es sich bei der Detektionsfläche um einen Teil einer Fotoplatte und/oder um eine holographische Registriervorrichtung handeln. Aus einer solchen Vorrichtung kann ein physikalisches Hologramm erzeugt werden, mit der Besonderheit, dass mit dem hier beschriebenen Verfahren ein referenzstrahlfreies Auslesen des Hologramms möglich ist. Das Verfahren umfasst dann ferner ein Auslesen, das ein Beugen des Vergleichsstrahlenbündels oder des Hauptstrahlenbündels an dem Interferenzmuster zur Rekonstruktion der holographischen Abbildung des Objekts beinhaltet. Das Auslesen kann physikalisch oder digital erfolgen, je nachdem, ob das Hologramm physikalisch oder digital vorliegt. Lokale Intensitätseffekte und/oder globale Phaseneffekte werden hierbei nicht betrachtet. Das Vergleichsstrahlenbündel oder das Hauptstrahlenbündel kann somit die Funktion eines Referenzstrahls in einer Holographieanwendung übernehmen.

Das Auslesen des Hologramms mit dem Hauptstrahlenbündel oder mit dem Vergleichsstrahlenbündel kann zu dem Vergleichsstrahlenbündel oder dem Hauptstrahlenbündel führen, wobei zusätzlich "Geister"-Bilder erzeugt werden können. Soweit das Erzeugen und/oder das Auslesen des Hologramms digital erfolgt, können die "Geister"-Bilder digital, insbesondere durch digitale Filter, unterdrückt werden. Erfolgt das Erzeugen und/oder das Auslesen des Hologramms physikalisch, beispielsweise durch Bescheinen einer Fotoplatte, kann es erforderlich sein, die "Geister"-Bilder mittels Ausblenden oder einer Filterung zu unterdrücken.

Gemäß zumindest einer Ausführungsform des Verfahrens umfasst das Ermitteln der Phase aus dem Interferenzmuster zumindest einen, bevorzugt alle, der folgenden weiteren Schritte:

> h1) Auswählen einer Frequenz, die Teil des Spektrums des Hauptstrahlenbündels ist und Ermitteln des Interferenzmusters bei dieser Frequenz;
> h2) Bestimmen der Intensität und/oder der Amplitude des propagierten Hauptstrahlenbündels und/oder Bestimmen der Intensität und/oder der Amplitude des propagierten Vergleichsstrahlenbündels auf der Detektionsfläche;
> h3) Bestimmen eines komplexen Interferenzterms des Interferenzmusters;
> h4) Bestimmen eines komplexen Phasenanpassungsfaktors, der mögliche Skalen und Gesamtphasenunterschiede zwischen der Bestimmung der Propagatorabbildung und dem komplexen Interferenzterms berücksichtigt.

Die Auswertung der Interferogramme kann dann insbesondere digital erfolgen. Der komplexe Interferenzterm kann dann dem digitalen Interferogramm und/oder dem digitalen Hologramm entsprechen.

Zu Schritt h1): Es ist möglich, dass als Frequenz eine Zentralfrequenz des Eingangsstrahlenbündels verwendet wird. Die Wahl der Zentralfrequenz bietet sich beispielsweise dann an, wenn es sich bei dem Eingangsstrahlenbündel um ein, insbesondere zeitlich und räumlich, (quasi-)kohärentes Feld handelt und die Kohärenzlänge des Eingangsstrahlenbündels länger als die Wegdifferenzen im ersten und/oder zweiten Interferometerarm ist. Die Zentralfrequenz kann dann die Frequenz des Spektrums des Eingangsstrahlenbündels sein, an der das Eingangsstrahlenbündel ein, insbesondere einziges, Intensitätsmaximum aufweist. Ferner ist es möglich, dass durch einen im Strahlgang zumindest eines der Strahlenbündel installierter Filter, wie beispielsweise ein Interferenzfilter, ein dielektrischer Filter, ein Etalon und/oder ein Fabry-Perot-Filter, bereits eine ausreichende Frequenzselektion erreicht wird. Das Eingangsstrahlenbündel kann dann als quasi-kohärent betrachtet werden.

Zu Schritt h2): Es ist möglich, dass das Bestimmen der Intensität und/oder der Amplitude des propagierten Hauptstrahlenbündels ein Blockieren des Vergleichsstrahlenbündels oder des propagierten Vergleichsstrahlenbündels mittels weiterer optischer Elemente umfasst. Das alternative oder zusätzliche Bestimmen der Intensität und/oder der Amplitude des propagierten Vergleichsstrahlenbündels kann ferner ein Blockieren des Hauptstrahlenbündels oder des propagierten Hauptstrahlenbündels mittels weiterer optischer Elemente umfassen.

Zu Schritt h3): Der Schritt h3) kann insbesondere im Fall eines digitalen Hologramms erforderlich sein. Die Auswertung des Hologramms bzw. das Ermitteln der Phase des Eingangsstrahlenbündels kann dann digital, also beispielsweise mit einer digitalen Auswerteeinheit, erfolgen. Insbesondere kann die Auswertung eines digitalen Hologramms durch Bestimmen des komplexen, insbesondere lokalen, Interferenzterms erfolgen. Im Folgenden werden die Begriffe "komplexer Interferenzterm", "lokaler Interferenzterm" und "Interferenzterm" gleichbedeutend verwendet. Bevorzugt ist die Bestimmung des komplexen Interferenzterms gleichbedeutend mit der digitalen Erzeugung eines Hologramms. Die Auslesung kann einer punktweisen Multiplikation des komplexen Interferenzterms mit der, insbesondere komplexen, Amplitude des Hauptstrahlenbündels und/oder des Vergleichsstrahlenbündels entsprechen.

Der komplexe Interferenzterm (IF) ist bevorzugt das Produkt des Betrags der Amplitude des propagierten Hauptstrahlenbündels (E1), des Betrags des propagierten Vergleichsstrahlenbündels (E2) und eines Phasenfaktors $\psi$:

$$IF = |E1| \cdot |E2| \cdot \exp(i \cdot \Psi),$$

wobei der Phasenfaktor $\psi$ die Differenz zwischen der Phase des propagierten Hauptstrahlenbündels und der Phase des propagierten Vergleichsstrahlenbündels ist. Beispielsweise kann der komplexe Interferenzterm über die sogenannte "carrier-phase"-Methode ermittelt werden.

Die Bestimmung des komplexen Interferenzterms IF kann beispielsweise mit einer Phasenverschiebungs-Methode (Englisch: phase shifting), einer Trägerphasen-Methode (Englisch: carrier phase) und/oder einer räumlichen Phasenverschiebungs-Methode (Englisch: spatial phase shifting) erfolgen. Diese Methoden sind beispielsweise in der Druckschrift "Handbook of optical Metrology" (Kapitel 8 und Kapitel 8.5.1; editiert von Toru Yoshizawa und Francis Group, CRC Press Taylor2. Auflage) beschrieben. Die Phasenverschiebungs-Methode kann beispielsweise eine parallele Bestimmung des komplexen Interferenzterms (Schritt h3) und der Amplitude und/oder der Intensität des propagierten Hauptstrahlenbündels bzw. des propagierten Vergleichsstrahlenbündels (Schritt h2) ermöglichen. Ferner kann die Trägerphasen-Methode eine Bestimmung des komplexen Interferenzterms mit einer einzigen Aufnahme bzw. Messung (sogenanntes single-shot-Verfahren) ermöglichen. Sowohl die Phasenverschiebungs-Methode als auch die Trägerphasen-Methode erlauben eine Bestimmung der Intensität des propagierten Hauptstrahlenbündels bzw. des propagierten Vergleichsstrahlenbündels.

Zu Schritt h4): Durch geeignete Wahl des Phasenanpassungsfaktors kann die Normierung berücksichtigt werden. Es ist möglich, die Bestimmung des Phasenanpassungsfaktors auf ein Problem bei der Phasenanpassung zurückzuführen. Ein solches Problem kann beispielsweise auftreten, wenn die Pfadlängen der Interferometerarme nicht ad hoc mit der erforderlichen Genauigkeit von Bruchteilen einer Wellenlänge bekannt sind. Das Problem kann grundsätzlich über eine Kalibrierung mit einem hinreichend bekannten Kalibrierungsstrahlenbündel gelöst werden. Beispielsweise kann hierfür eine bekannte Phase, die beispielsweise aus einer Kalibrationsmessung und/oder einer Störungsrekonstruktion bekannt ist, mit dem hier beschriebenen Verfahren rekonstruiert werden. Der Phasenanpassungsfaktor kann solange variiert werden, bis die Qualität der Rekonstruktion zufriedenstellend ist, ähnlich einem elektronischen Fokussierungs-Verfahren (Englisch: electronic focussing). Alternativ oder zusätzlich kann eine Einzelwertanalyse (Englisch: single value analysis; im Folgenden auch SVD-Analyse; SVD steht für singular value decomposition, entsprechend einer Singulärwertzerlegung) des Verfahrens durchgeführt werden.

Gemäß zumindest einer Ausführungsform des Verfahrens erfolgen die Bestimmung der Intensität und/oder der Amplitude des propagierten Hauptstrahlenbündels und/oder des propagierten Vergleichsstrahlenbündels (Schritt h2) und die Bestimmung des komplexen Interferenzterms (Schritt h3) mit einer gemeinsamen Bestimmungsmethode. Bevorzugt eignen sich hierfür die Phasenverschiebungs-Methode und/oder die Trägerphasen-Methode. Hierfür kann es erforderlich sein, zuvor die Frequenz (Schritt h1) zu wählen.

Ein Vorteil der Ermittlung der Phase des Eingangsstrahlenbündels unter Verwendung der Propagatorabbildung des Optiksystems ist die Möglichkeit, unterschiedliche optische Aufbauten und/oder Optiksysteme zur Phasenanalyse einsetzen zu können. Das Optiksystem kann so gewählt werden, dass die Propagatorabbildung auf die Erfordernisse der Problemstellung angepasst ist.

Ein weiterer Vorteil besteht darin, dass Interferometersysteme mit unterschiedlichen Interferometerarmen, insbesondere unterschiedlichen Armlängen, die verschiedene optische Elemente aufweisen, analysiert und ausgewertet werden können. Wesentliche Näherungen sind hierfür nicht erforderlich. Eine ausgeprägte Asymmetrie zwischen den beiden Propagationspfaden bzw. den beiden Interferometerarmen kann ein Ermitteln der Phase erleichtern. Daher besteht bei geeignetem Design des Optiksystems die Möglichkeit, die räumliche Phase über eine einzelne Messung an einem Detektor zu messen (sogenanntes "single-shot-System"). Wird diese Eigenschaft mit einer Phasenbestimmung des komplexen Interferenzterms kombiniert, kann ein System zur Phasenbestimmung einer lokalen Phase auf einer Fläche im single-shot-Verfahren ohne externen Referenzstrahl bereitgestellt werden.

Dem Verfahren liegen insbesondere die im Folgenden beschriebenen Ideen zugrunde. Die im Folgenden erläuterten mathematischen Modelle zur Beschreibung des Verfahrens werden lediglich zum Verständnis der Erfindung aufgeführt. Insbesondere sind die mathematischen Modelle nicht als einschränkend für eine allgemeine Ausführung des Verfahrens anzusehen. Sollte eines der Modelle und/oder eine der folgenden mathematischen Formeln unvollständig oder sogar teilweise fehlerhaft sein, bleiben die anfangs beschriebenen Ausführungsformen des Verfahrens weiterhin anwendbar.

Ein durch eine Eingangsebene des Optiksystems, bei der es sich beispielsweise um eine Apertur des Optiksystems handeln kann, eintretendes Eingangsstrahlenbündel, das durch ein, insbesondere räumlich kohärentes, Vektorfeld $E_{in,s}(x,y,z,t)$ beschrieben wird, wird in zwei Felder, vorliegend das Hauptstrahlenbündel und das Vergleichsstrahlenbündel, aufgeteilt und entlang zweier Interferometerarme propagiert. Hierbei sind s eine Indizierung des Vektors des Feldes, beispielsweise die Polarisation, x,y,z die Raumkoordinaten und t die Zeit. Wird das Feld in der sogenannten "skalaren" Näherung beschrieben und/oder wird das Feld als unpolarisiertes Feld beschrieben, so nimmt der Index s nur einen Wert an (s=1) und kann in den Formeln unterdrückt werden. Das propagierte Hauptstrahlenbündel, also das erste Feld E1 im ersten Interferometerarm, und das propagierte Vergleichsstrahlenbündel, also das zweite Feld E2 im zweiten Interferometerarm, interferieren auf der Detektionsfläche. Die gemessene Interferenz ist somit eine Funktion der Felder E1 und E2.

Gemäß der Fourier-Analyse können Felder E, insbesondere die Felder $E_{in}$, E1 und E2, als Summe über Feldanteile unterschiedlicher Frequenz $\omega_i$ ($\omega_i$ > 0) dargestellt werden, wobei i ein Index ist:

$$E_s(x,y,z,t) \;=\; \sum_{\omega_i} \hat{E}_s(x,y,z,\omega) \, e^{j\,\omega_i\, t}$$

(vgl. auch Born / Wolf, Principles of Optics, Kapitel 10.2.; Cambridge University Press, 7. Auflage). Die in der Summe auftretenden Funktionen $\hat{E}_s(x,y,z,\omega_i)$ sind die lokalen Entwicklungskoeffizienten der Fourier-Entwicklung nach $\omega_i$ und sind komplexe Funktionen. Sie können dargestellt werden als:

$$\hat{E}_s(x,y,z,\omega_i) = \left| \hat{E}_s(x,y,z,\omega_i) \right| \, e^{j\Phi_s(x,y,z,\omega_i)} .$$

Die spektrale Verteilung der Intensität im Bereich der Interferenz zwischen E1 und E2, das heißt, das mit der Detektionsfläche ermittelte , insbesondere digitale, Interferogramm, wird im Folgenden $\hat{I}_{IF,s}(x,y,z,\omega_i)$ genannt. Damit gilt:

$$\hat{I}_{IF,s}(x,y,z,\omega_i) = \left| \hat{E}1_s(x,y,z,\omega_i) + \hat{E}2_s(x,y,z,\omega_i) \right|^2 =$$
$$= \left| \hat{E}1_s \right|^2 + \left| \hat{E}2_s \right|^2 + \overline{\hat{E}1_s}\,\hat{E}2_s + \overline{\hat{E}2_s}\,\hat{E}1_s , \qquad (1)$$

wobei im zweiten Teil der Gleichung zur Übersichtlichkeit die Indizes weggelassen wurden. Es wird hierbei insbesondere angenommen, dass die Erzeugung des Hologramms ausschließlich als Intensitätsbild des Interferogramms erfolgt. Mit anderen Worten, das Hologramm enthält alle Terme des Intensitätsfeldes $\hat{I}_{IF,s}(x,y,z,\omega_i)$. Das, insbesondere spektral aufgelöst, gemessene Interferogramm setzt sich somit aus den jeweiligen Interferenzen des propagierten Hauptstrahlenbündels und des propagierten Vergleichsstrahlenbündels sowie Mischtermen aus den Amplituden der beiden Strahlenbündel zusammen. Der letzte Term der Gleichung (1) kann als sogenannter komplexer, lokaler Interferenzterm IF wie folgt dargestellt werden:

$$IF_s(x,y,z,\omega_i) = \left| \hat{E}2_s(x,y,z,\omega_i) \right| \left| \hat{E}1_s(x,y,z,\omega_i) \right| \exp\left[ j\Psi_s(x,y,z,\omega_i) \right] \qquad (2)$$

Bei dem Interferenzterm kann es sich insbesondere um das digitale Hologramm handeln. Hierbei ist $\Psi_s(x,y,z,\omega_i):=\Phi1_s(x,y,z,\omega_i)- \Phi2_s(x,y,z,\omega_i)$, wobei $\Phi1$ die Phase des Hauptstrahls und $\Phi2$ die Phase des Vergleichsstrahls ist. Die Phase des Hauptstrahls entspricht einer Phase des ersten Eingangsstrahls und die Phase des Vergleichsstrahls entspricht einer Phase des zweiten Eingangsstrahls. Der lokale Interferenzterm setzt sich somit aus Interferenzen von unterschiedlichen Phasen der Eingangsstrahlen zusammen.

Ersetzt man das propagierte Vergleichsstrahlenbündel E2 in der Formel (1) bzw. (2) durch eine lediglich von dem propagierten Hauptstrahlenbündel abhängige Funktion U(E1), so wird das Interferenzbild $I_{IF,s}$ eine Funktion von lediglich E1. Unter Nutzung der Kenntnis über den Aufbau des Interferometers und unter Ausnutzung linearer, insbesondere elektromagnetischer, Feldgleichungen, wie beispielsweise der Lösung der Helmholtz-Gleichung bzw. der Propagationstheorien nach Huygens, Rayleigh und Sommerfeld, kann aus einem der interferierenden Felder über die Verfahren der Feldpropagation die Phase des Feldes an einem anderen Ort, insbesondere an einem Ort vor oder in dem Interferometer berechnet werden. Insbesondere kann unter bestimmten Bedingungen aus dem ersten Feld E1 auf der Detektionsfläche das zweite Feld E2 auf der Detektionsfläche berechnet werden (über die sogenannte Propagatorabbildung U). Die Propagation ist linear, d.h. das Feld an der Detektionsfläche ist eine lineare Funktion U des Feldes. Dies wird im Folgenden näher erläutert.

Gemäß Formel (2) ist die komplexe Phase $\Psi$ von IF eine definierte Funktion des Ortes. Es ist möglich, die komplexe Phase eines Interferenzterms mittels bekannter Methoden, wie beispielsweise Phasenverschiebungs-Verfahren oder Trägerphase-Verfahren, zu messen. Die Amplituden |E1|, |E2| und/oder die komplexe Phase $\Psi$ des lokalen Interferenzterms können somit, beispielsweise aus einer vorangegangenen Messung, für Punkte auf der Detektionsfläche und für die jeweils verwendete Frequenz des Eingangsstrahlenbündels bekannt sein. Die komplexe Phase $\Psi=\Phi1-\Phi2$ gibt die Differenz der Phasen des Hauptstrahlenbündels und der Vergleichsstrahlenbündels an, ohne aber eine direkte Möglichkeit für eine Auflösung der individuellen Beiträge von $\Phi1$ und $\Phi2$ zu bieten.

Es ist in manchen Messsituationen möglich, dass die Amplituden und der Betrag des Interferenzterms nur in skalierten Einheiten bekannt sind, d.h. auf einer Skala, die sich für jede Frequenz $\omega_i$ zwischen $|E1|^2$ und $|IF|$ um einen ortsunabhängigen, aber festen, Phasenanpassungsfaktor $f(\omega)$ unterscheiden kann, sodass

$$f_s(\omega_i)\, IF_s(x,y,z,\omega_i) = \left|\hat{E}2_s(x,y,z,\omega_i)\right|\left|\hat{E}1_s(x,y,z,\omega_i)\right| e^{j(\Phi1_s(x,y,z,\omega_i)-\Phi2_s(x,y,z,\omega_i))} \qquad (3).$$

Der Phasenanpassungsfaktor kann bei der Bestimmung der Propagatorabbildung und des komplexen Interferenzterms in die Bestimmungsgrößen eingearbeitet werden. Hierdurch ist es möglich, dass der Phasenanpassungsfaktor in mathematischen Modellen nicht explizit auftritt. In der nachfolgenden Darstellung wird der Phasenanpassungsfaktor so weit als möglich explizit dargestellt. Der Phasenanpassungsfaktor wird an anderer Stelle der Anmeldung auch "ortsunabhängiger Phasenfaktor" genannt.

Ferner ist aus dem Aufbau des Interferometers die Propagation des propagierten Hauptstrahlenbündels E1 in das propagierte Vergleichsstrahlenbündel E2 mittels der Propagatorabbildung U bekannt. Diese Propagation kann mathematisch wie folgt umschrieben werden:

$$\hat{E}2_t(x_{uv},y_{uv},z_{uv},\omega_i) = \sum_{s,m,n} U_{ts}(x_{uv},y_{uv},z_{uv},x_{mn},y_{mn},z_{mn},\omega)\,\hat{E}1_s(x_{mn},y_{mn},z_{mn},\omega_i) \qquad (4)$$

Hierbei sind u, v und m, n geeignete Indizierungen der Detektionsfläche mit m=1..M, n=1..N, u=1..U, v=1..V, wobei M, N, U, V natürliche Zahlen sind. $x_{mn}$, $y_{mh}$, $z_{mn}$, $X_{uv}$, $y_{uv}$ $z_{uv}$ sind Punkte auf der Detektionsfläche. Bevorzugt wird die gleiche Rasterung für u, v und m, n verwendet. Die Indizierungen s und t entsprechen der Polarisation.

Im Folgenden wird bei den Frequenzen $\omega_i$ der Index i unterdrückt; wobei die Frequenz $\omega$ eine Frequenz aus der Menge der Frequenzen ist, die im Frequenzspektrum IF vorkommt. Ferner werden die folgenden Abkürzungen eingeführt:

$$\hat{E}_s(x_{mn},y_{mn},z_{mn},\omega) = \hat{E}_{s,m,n,\omega} = \left|\hat{E}_{s,m,n,\omega}\right|\exp(j\Phi_{s,m,n,\omega}), \text{ und } IF_s(x_{mn},y_{mn},z_{mn},\omega) = IF_{s,m,n,\omega}.$$

Die Berücksichtigung der Propagatorabbildung (Formel (3)) und des Phasenanpassungsfaktors führt zu folgender Gleichung für den lokalen Interferenzterm:

$$f_t(\omega)\, IF_{t,m,n,\omega} = \sum_{s,u,v} \overline{U_{t,m,n,s,u,v,\omega} E1_{s,u,v,\omega}}\, E1_{t,m,n,\omega} \qquad \text{(für alle t, m, n im Indexbereich)(5).}$$

Eine Multiplikation des konjugiert Komplexen der Gleichung (5) mit dem das Hauptstrahlenbündel beschreibende Feld E1 führt zu der folgenden Umformung zu einer Bestimmungsgleichung:

$$\overline{f_t(\omega)\, IF_{t,m,n,\omega}}\,\hat{E}1_{t,m,n,\omega} = \left|\hat{E}1_{t,m,n,\omega}\right|^2 \sum_{s,u,v} U_{t,m,n,s,u,v,\omega}\,\hat{E}1_{s,u,v,\omega} \qquad (6)$$

Hierbei sind die Amplitude des Hauptstrahlenbündels, |E1|, die Intensität des Hauptstrahlenbündels, $|E1|^2$, das komplex Konjugierte des lokalen Interferenzterms IF und die Propagatorabbildung U aus unabhängigen Messungen bekannt. Der Faktor f($\omega$) ist ein, insbesondere beliebiger, Phasenfaktor. Folglich kann die Gleichung für jede Frequenz $\omega$ unabhängig für die komplexe Amplitude |E1| gelöst werden.

Damit beinhaltet das Ermitteln der Phase des Eingangsstrahlenbündels die Lösung der linearen Gleichung der Bestimmungsgleichung (6)für alle m, n in der vordefinierten Detektionsfläche. Das Verfahren definiert somit eine Klasse von Bestimmungsgleichungen, die linear in dem Feld des Hauptstrahlenbündels E1 sind, unter Vorkenntnis der Amplitude des Hauptstrahlenbündels. Die Lösung der Gleichung nach Ê1, das auch die Phase enthält, in der Ortsbasis oder einer sonst gewählten Basis ergibt ein rekonstruiertes Feld, recÊ1.

Soweit der Rang der Bestimmungsgleichung (6) für eine eindeutige Bestimmung der Lösung nicht ausreicht, kann das Verfahren ein Ergänzen des Gleichungssystems um weitere Bestimmungsgleichungen umfassen. Der Rang der Gleichung kann zudem durch eine erhöhte Asymmetrie zwischen dem ersten Interferometerarm und dem zweiten Interferometerarm erhöht werden. Beispielsweise kann dies durch Einsetzen einer, insbesondere zusätzlichen, Linse in eine der beiden Interferometerarme, durch die Verwendung einer Linse mit einer höheren Brechkraft, eine Anpassung der Drehung zwischen den beiden Interferometerarmen und/oder das Hinzufügen weiterer optischer Komponenten in die Interferometerarme erzielt werden. Alternativ oder zusätzlich ist die Erhöhung des Rangs über eine Kombination unterschiedlicher Messungen möglich.

Zur Lösung der Gleichung im Rahmen des hier beschriebenen Verfahrens ist es insbesondere möglich, dass, insbesondere numerisch, ein Lösungsvektor gesucht wird, der den Fehler (im Folgenden auch: "Rest") bei der Lösung der homogenen Gleichung minimiert. Ein solches Verfahren eignet sich insbesondere in den Fällen, wo durch Störeinflüsse, z.B. Rauschen in den Messdaten, Quantisierungsfehler auf dem Detektor, Detektorrauschen, Ungenauigkeiten im Phasenanpassungsfaktor und/oder Fehler bei der Bestimmung der Propagatorabbildung, die Lösung der Bestimmungsgleichung nicht mehr exakt sein kann.

Alternativ kann der rechtsseitige Eigenvektor zum niedrigsten s-Wert einer SVD-Zerlegung bestimmt werden. Insbesondere kann das zu lösende Gleichungssystem der Bestimmungsgleichung (6) in eine Matrix-Gleichung $M \cdot E = 0$ umgeschrieben werden, wobei E das gesuchte Feld ist. Damit ist das Vorgehen gemäß der SVD-Zerlegung äquivalent zur Lösung des zugehörigen Eigenwertproblems $\overline{M}^t M E = e_0 E$ zum niedrigsten Eigenwert $e_0$. Die Matrix $\overline{M}^t M$ kann selbstadjungiert und insbesondere hermitisch sein. Mit anderen Worten, das Problem der Phasenbestimmung kann durch entsprechende Wahl des Interferometersystems und insbesondere des darin enthaltenen Optiksystems auf das Problem der Eigenvektorbestimmung zum niedrigsten Eigenwert einer reellen, symmetrischen Matrix zurückgeführt werden. Für diese Klasse von Matrizen existieren stabile und schnelle numerische Lösungsverfahren.

Aus dem rekonstruierten Feld kann nun die Phase Φ1 (Modulo 2π) beispielsweise mit der folgenden Gleichung ermittelt werden:

$$\Phi1_s\,(\mathrm{x}_{mn},\mathrm{y}_{mn},\mathrm{z}_{mn},\omega) = \mathrm{Im}(\ln(rec\hat{E}1_{s,m,n,\omega}))$$

Für die Lösung der Bestimmungsgleichung (6) kann eine beliebige Funktionenbasis gewählt werden. Beispielsweise eignet sich eine Planwellenbasis (also eine Fourier-Basis), eine Wavelet-Basis oder eine Basis mit Zernike-Funktionen. Durch geeignete Basiswahl kann die Berechnung der Propagatorabbildung U vereinfacht werden. Beispielsweise ist im Fourier-Raum der Rayleigh-Sommerfeld Propagator des freien Raumes diagonal.

Die Bestimmung der Phase hat eine Unbestimmtheit bezüglich der Addition bzw. Subtraktion von ganzzahligen Vielfachen von 2π. Die Indizierung der Detektionsfläche kann derart erfolgen, dass die betrachteten Funktionen E1, E2, IF das Shannon-Nyquist-Sampling-Theorem erfüllen. Hierfür kann es im Fall von äquidistanten Pixeln der Detektionsfläche erforderlich sein, die Detektionsfläche derart auszubilden, dass die Phasenvariation von einem indizierten Pixel zum nächsten maximal +/-π ist. Hierfür kann beispielsweise eine Phasenentkompaktierungstechnik (Englisch: phase unwrapping) erforderlich sein.

Soweit unterschiedliche Interferenzen, beispielsweise bei veränderlichen Interferometersystemen, über die Bestimmungsgleichung (6) gemeinsam ausgewertet werden sollen, kann es erforderlich sein, für jede der Interferenzen die Propagationsmatrix und den Phasenanpassungsfaktor zu bestimmen. Das Gleichungssystem kann dann weitere Gleichungen enthalten, beispielsweise unter der Annahme, dass das Hauptstrahlenbündel seine Lage relativ zur Indizierung der Detektionsfläche nicht verändert. Im Fall einer Änderung der Lage kann es erforderlich sein, die Indizierungen zwischen verschiedenen Interferometerkonstellationen aneinander anzupassen. Dies stellt kein grundsätzliches Problem dar. Lösbar ist dies im allgemeinsten Fall über die Methoden der Bildtransformation, zum Beispiel mittels der projektiven oder affinen Transformation von Bildern.

Der Phasenanpassungsfaktor kann neben den oben aufgeführten Methoden der Kalibrierung und/oder der SVD-Analyse, beispielsweise einer SVD-Analyse der Bestimmungsgleichung, mit den beiden weiteren im Folgenden beschriebenen Methoden anhand der Daten des Hologramms bzw. des Interferogramms bestimmt und/oder nachkalibriert werden. Diese beiden Methoden können auch als Vorstufe des hier beschriebenen Verfahrens zur Bestimmung der Phase hilfreich sein.

Die erste Methode eignet sich insbesondere zur Bestimmung des Betrags des Phasenanpassungsfaktors. Hierfür wird eine unitäre Propagatorabbildung vorausgesetzt, sodass E1 und E2 in der (vereinfacht dargestellten) Formel E2=U·E1 das gleiche Betragsquadrat aufweisen. Damit ergibt sich durch Umformung der Gleichung (3) für alle Polarisationen t die Amplitude des Phasenanpassungsfaktors:

$$\left|f_t(\omega)\right| = \left\|E1_{t,m,n,\omega}\right\| \bigg/ \left\|\frac{IF_{t,m,n,\omega}}{E1_{t,m,n,\omega}}\right\| \tag{7}.$$

||A|| steht hierbei für eine Norm der Matrix A, wobei A E1, IF und/oder E1 entspricht.

Die zweite Methode eignet sich insbesondere zur Bestimmung eines Imaginärteils, entsprechend einer Phase, des Phasenanpassungsfaktors. Hierbei wird angenommen, dass es für die Abbildung E2=U E1 näherungsweise einen Punkt $x_f$, $y_f$, $z_f$ auf der Detektionsfläche gibt, für den unabhängig vom tatsächlich vorliegenden Feld des Hauptstrahlenbündel E1 bzw. des Vergleichsstrahlenbündels E2 für eine beliebige Polarisation t jeweils gilt:

$$\hat{E}2_t(x_f, y_f, z_f, \omega) = \hat{E}1_t(x_f, y_f, z_f, \omega)$$

Ein derartiger Punkt $x_f$, $y_f$, $z_f$ der Abbildung U kann ein Fixpunkt für E1 und E2 sein. Am Fixpunkt gilt somit (vgl. Gleichung (3)):

$$f_t(\omega)\, IF_t(x_f, y_f, z_f, \omega) = \overline{\hat{E}2(x_f, y_f, z_f, \omega)}\, \hat{E}1(x_f, y_f, z_f, \omega) = \left|\hat{E}1(x_f, y_f, z_f, \omega)\right|^2$$

Damit gilt:

$$\mathrm{Im}(\ln(f_t(\omega))) = -\mathrm{Im}(\ln(IF_t(x_f, y_f, z_f, \omega)))$$

Gemäß einer Ausführungsform des Verfahrens wird die Propagatorabbildung U aus der ersten Propagatorabbildung U1 des ersten Interferometerarms und der zweiten Propagatorabbildung U2 des zweiten Interferometerarms ermittelt. Die Ermittlung kann wie folgt erfolgen. Die erste Propagatorabbildung beschreibt die Propagation des Eingangsstrahlenbündels entlang des ersten Interferometerarms und die zweite Propagatorabbildung beschreibt die Propagation des Eingangsstrahlenbündels entlang des zweiten Interferometerarms.

Die Propagationen entlang der beiden Interferometerarme erfolgen jeweils ausgehend von der gleichen Ebene, wobei für die Ermittlung der Formeln zunächst der Strahlteiler nicht berücksichtigt wird. In Formeln ausgedrückt:

$$\hat{E}1_t(x, y, z, \omega_i) = \sum_{s,g,h} U1_{t\,s}(x, y, z, x_{gh}, y_{gh}, z_{gh}, \omega_i)\, \hat{E}_{in,s}(x_{gh}, y_{gh}, z_{gh}, \omega_i)$$

$$\hat{E}2_t(x, y, z, \omega_i) = \sum_{s,g,h} U2_{t\,s}(x, y, z, x_{gh}, y_{gh}, z_{gh}, \omega_i)\, \hat{E}_{in,s}(x_{gh}, y_{gh}, z_{gh}, \omega_i) \qquad (6)$$

Hierbei ist g, h, eine beliebige Indizierung der Eingangsebene mit g=1..G, h=1..H, wobei G und H natürliche Zahlen sind. $x_{gh}$, $y_{gh}$, $z_{gh}$ sind Punkte auf der Eingangsebene und x, y, z sind Punkte auf der Detektionsfläche.

Zur Ermittlung der Propagatorabbildung aus der ersten und der zweiten Propagatorabbildung können die Felder $E_{in}$, E1, E2 des Interferometers auf Felder, für die es keine wesentliche Vignettierung gibt, eingeschränkt werden. Beispielsweise ist hierfür die Indizierung der Pixel auf der Detektionsfläche so gewählt, dass lediglich Bereiche der Felder ohne wesentliche Vignettierung erfasst werden. In dem Fall ohne wesentliche Vignettierung kann sich die Propagatorabbildung U aus der Abbildung U2·U1$^{-1}$, also aus der Multiplikation der zweiten Propagatorabbildung mit dem Inversen der ersten Propagatorabbildung, ergeben.

Im Folgenden wird das hier beschriebene Verfahren anhand von Ausführungsbeispielen und den dazugehörigen Figuren näher erläutert.

Die Figuren 1a, 1b, 1c, 1d, 1e und 2 zeigen Ausführungsbeispiele eines hier beschriebenen Verfahrens anhand schematischer Darstellungen.

Die Figuren 3 bis 5 zeigen Simulationen und Messergebnisse für ein Ausführungsbeispiel eines hier beschriebenen Verfahrens.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

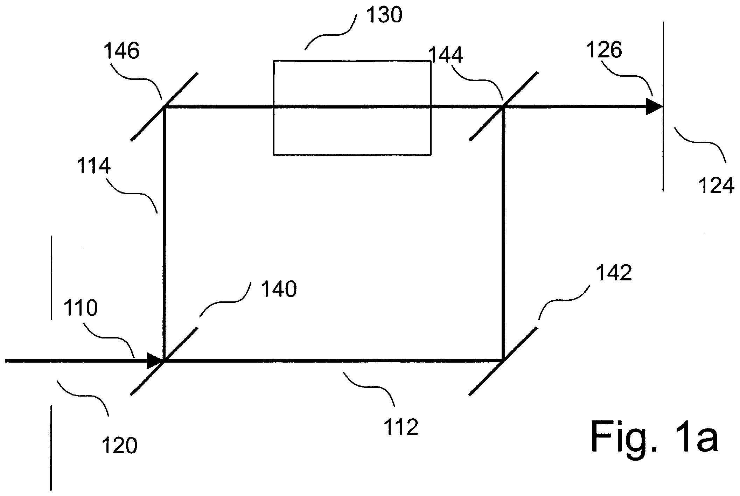

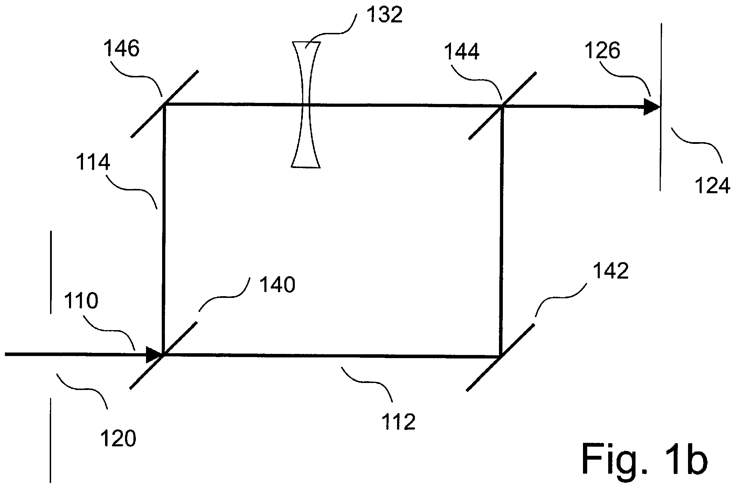

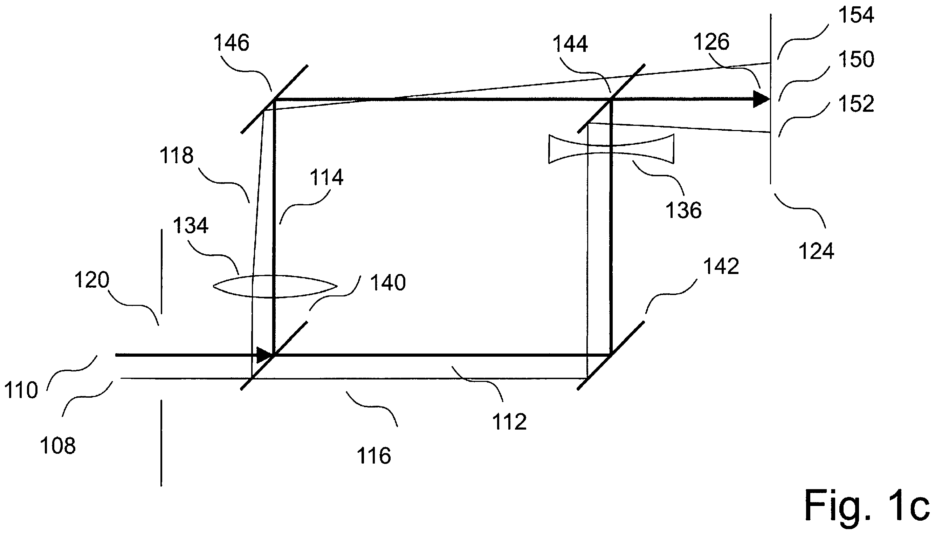

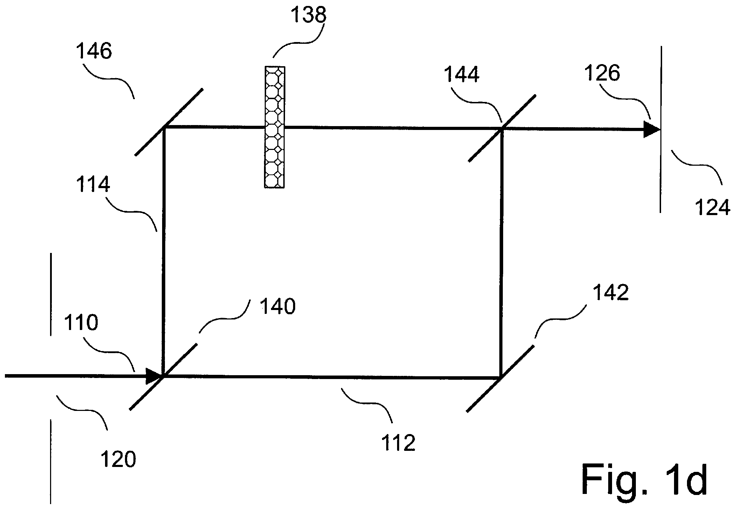

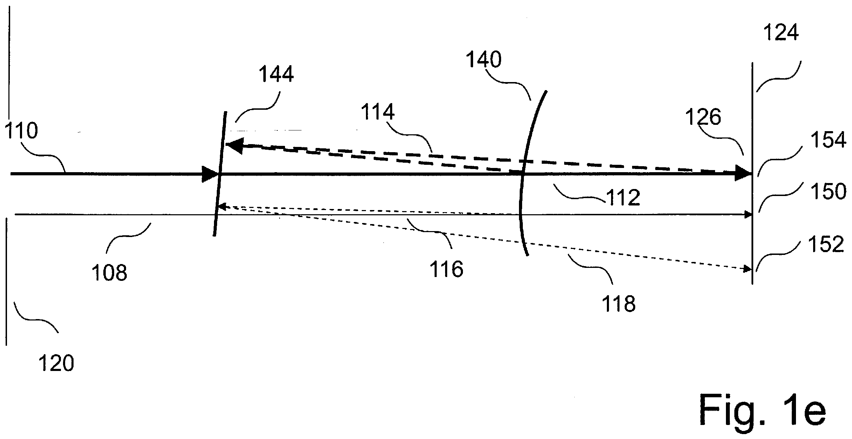

Anhand der schematischen Darstellungen der Figuren 1a, 1b, 1c, 1d und 1e sind Ausführungsbeispiele von Interferometersystemen für Ausführungsbeispiele eines hier beschriebenen Verfahrens näher erläutert. Die Figuren 1a bis 1d zeigen jeweils Mach-Zehnder-artige Interferometersysteme, während die Figur 1e einen Fabry-Perot-artigen Aufbau darstellt.

Jedes der Interferometersysteme der Figuren 1a bis 1d umfasst eine Detektionsfläche 124 und ein Optiksystem mit einem Strahlteiler 140 und einem Strahlkombinierer 144 zur Bereitstellung eines ersten und eines zweiten Interferometerarms. Ein durch eine Blende 120 einfallendes Eingangsstrahlenbündel 110 wird mittels des Strahlteilers 140 in ein Hauptstrahlenbündel 112 und ein Vergleichsstrahlenbündel 114 aufgeteilt. Das Hauptstrahlenbündel 112 wird entlang des ersten Interferometerarms propagiert und das Vergleichsstrahlenbündel 114 wird entlang des zweiten Interferometerarms propagiert. Jeder der beiden Interferometerarme enthält optische Komponenten des Optiksystems. Der erste Interferometerarm beinhaltet ein erstes Umlenkelement 142 und der zweite Interferometerarm beinhaltet ein zweites Umlenkelement 146. Bei den Umlenkelementen 142, 146 kann es sich beispielsweise um Spiegel handeln. Bei den Interferometersystemen gemäß der Figuren 1a, 1b, 1c und 1d werden das propagierte Hauptstrahlenbündel 112 und das propagierte Vergleichsstrahlenbündel 114 mittels des Strahlkombinierers 144, der dem Strahlteiler 140 in Ausbreitungsrichtung des Hauptstrahlenbündels 112 bzw. des Vergleichsstrahlenbündels 114 nachgeordnet ist, zu einem Interferenzstrahlenbündel kombiniert und auf der Detektionsfläche 124 zur Interferenz gebracht. Das entstandene Interferenzmuster wird als Interferogramm 126 bzw. als Hologramm 126 digital oder physikalisch gespeichert. Die Ausführungsbeispiele der Figuren 1a, 1b, 1c und 1d unterscheiden sich hierbei wie folgt.

Das Optiksystem des Ausführungsbeispiels der Figur 1a umfasst ein in den zweiten Interferometerarm eingebrachtes optisches Element 130. Beispielsweise kann es sich bei dem optischen Element 130 um ein Strahlrotationselement und/oder ein diffraktives optisches Element handeln. Mittels des optischen Elements 130 ist es möglich, das entlang des zweiten Interferometerarms propagierende Vergleichsstrahlenbündel 114 im Vergleich zu dem Hauptstrahlenbündel 112 derart zu drehen und/oder zu verändern, dass bei der Überlagerung mit dem Strahlkombinierer 144 jeweils Strahlen mit unterschiedlichen Phasen interferieren. Alternativ oder zusätzlich ist es möglich, dass der erste Interferometerarm ein optisches Element enthält (in der Figur 1 nicht gezeigt).

Das Optiksystem des Ausführungsbeispiels der Figur 1b umfasst eine in den zweiten Interferometerarm eingebrachte Linse 132, bei der es sich auch um ein Linsensystem handeln kann. Rein beispielhaft ist eine konkave Linse 132, also eine Zerstreuungslinse, dargestellt. Mittels der Linse 132 kann das Vergleichsstrahlenbündel 114 fokussiert und/oder defokussiert werden. Ferner ist es möglich, das Vergleichsstrahlenbündel 114 mittels der Linse um die eigene Achse zu drehen (siehe auch Figur 1c). Ferner ist es möglich, dass die Phasen der Vergleichsstrahlen des Vergleichsstrahlenbündels 114 aufgrund unterschiedlicher optischer Weglängen in der Linse 132 moduliert werden können.

Das Optiksystem des Ausführungsbeispiels der Figur 1c umfasst eine in den ersten Interferometerarm eingebrachte erste Linse 136 und eine in den zweiten Interferometerarm eingebrachte zweite Linse 134. Bei der ersten Linse 136 und/oder der zweiten Linse 134 kann es sich auch jeweils um ein Linsensystem handeln. Rein beispielhaft ist die erste Linse 136 als konkave Linse, also als Zerstreuungslinse, dargestellt und die zweite Linse 134 als konvexe Linse, also als Sammellinse. Die erste Linse 136 und die zweite Linse 134 können unterschiedlich ausgebildet sein. Beispielsweise unterscheiden sich die beiden Linsen in ihrer Krümmung und/oder ihrer Brechkraft. Ferner ist in der Figur 1c exemplarisch die Propagation eines abseits eines Zentralstrahls des Eingangsstrahlenbündels 110 angeordneten Eingangsstrahls 108 des Eingangsstrahlenbündels 110 dargestellt. Der Zentralstrahl fällt im Rahmen der Herstellungstoleranzen mit zumindest einer der optischen Achsen der Linsen zusammen.

Der Eingangsstrahl 108 wird mittels des Strahlteilers 140 in einen ersten Hauptstrahl 116 des Hauptstrahlenbündels 112 und einen ersten Vergleichsstrahl 118 des Vergleichsstrahlenbündels 114 aufgespalten. Der erste Hauptstrahl 116 wird entlang des ersten Interferometerarms, also insbesondere durch die erste Linse 136, propagiert, während der erste Vergleichsstrahl 118 entlang des zweiten Interferometerarms, also insbesondere durch die zweite Linse 134, propagiert wird. Hierbei wird der erste Hauptstrahl 116 von der optischen Achse weggebrochen während der erste Vergleichsstrahl 118 zuerst zu der optischen Achse hin gebrochen wird. Es bildet sich hierbei ein Fokus nach dem Strahlumlenkungselement 146. Anschließend werden das propagierte Hauptstrahlenbündel 112 und das propagierte Vergleichsstrahlenbündel 114 mittels des Strahlkombinierers 144 zu einem Interferenzstrahlenbündel mit einem ersten Interferenzstrahl 152 und einem zweiten Interferenzstrahl 154 überlagert. Der erste Interferenzstrahl 152 und der zweite Interferenzstrahl 154 treffen die Detektionsfläche 124 an unterschiedlichen Punkten, insbesondere abseits von einem zentralen Interferenzstrahl 150, der die Propagation des Zentralstrahls des Eingangsstrahlenbündels 110 durch die Interferometerarme wiedergibt. Der erste Interferenzstrahl 152 enthält den ersten Hauptstrahl 116 und der zweite Interferenzstrahl 154 enthält den ersten Vergleichsstrahl 118. Aufgrund der unterschiedlichen Propagation innerhalb der beiden Interferometerarme treffen der erste Hauptstrahl 116 und der erste Vergleichsstrahl 118 die Detektionsfläche 124 somit an unterschiedlichen Punkten.

Bei einem Ausführungsbeispiel kann das Interferometersystem auch nur die erste Linse 136 oder die zweite Linse 134 aufweisen. Die jeweils andere Linse 134, 136 kann jedoch insbesondere eine Anpassung der Phasenfronten des Hauptstrahlenbündels 112 und des Vergleichsstrahlenbündels 114 ermöglichen. Beispielsweise weisen die jeweiligen Phasenfronten des Hauptstrahlenbündels 112 und des Vergleichsstrahlenbündels 114 aufgrund der Verwendung von zwei Linsen bzw. zwei Linsensystemen 134, 136 dieselbe Krümmung auf.

Das Optiksystem des Ausführungsbeispiels der Figur 1d umfasst ein in den zweiten Interferometerarm eingebrachtes diffraktives optisches Element 138. Beispielsweise handelt es sich bei dem diffraktiven optischen Element 138 um ein optisches Gitter. Mittels des diffraktiven optischen Elements 138 können beispielsweise die Phasen der Vergleichsstrahlen des Vergleichsstrahlenbündels 114 aufgrund unterschiedlicher optischer Weglängen moduliert werden.

Das Interferometersystem der Figur 1e basiert auf dem Aufbau eines Fabry-Perot-Interferometers. Wie zuvor bei der Figur 1c ist exemplarisch die Propagation eines Eingangsstrahlenbündels 110 inklusive eines abseits eines Zentralstrahls des Eingangsstrahlenbündels 110 angeordneten Eingangsstrahls 108 des Eingangsstrahlenbündels 110 dargestellt. Das Interferometersystem umfasst eine Blende 120, durch die der Eingangsstrahl 110 einfällt, einen Strahlkombinierer 144, einen dem Strahlkombinierer 144 in Ausbreitungsrichtung nachgeordneten Strahlteiler 140 und eine Detektionsfläche 124.

Der Strahlteiler 140 und der Strahlkombinierer 144 sind bezüglich der Ausbreitungsrichtung des Eingangsstrahlenbündels 110 geneigt und insbesondere nicht senkrecht zu der Ausbreitungsrichtung ausgerichtet. Ferner weist der Strahlkombinierer 144 eine Krümmung auf. Bei dem Strahlkombinierer 144 kann es sich um einen weiteren Strahlteiler und/oder ein Umlenkelement handeln. Der Strahlteiler 140 kann ein gekrümmter teildurchlässiger Spiegel sein. Der Strahlkombinierer 144 kann bei einer Wellenlänge des Eingangsstrahlenbündels 110 eine Reflexion von wenigstens 80% und höchstens 95%, beispielsweise 90%, und eine Transmission von wenigstens 5% und höchstens 15%, beispielsweise 10%, aufweisen. Hierdurch ist es zwar möglich, dass das Eingangsstrahlenbündel 110 beim Durchlaufen des Strahlkombinierers 144 viel Intensität, also beispielsweise 90% der Intensität, verliert, jedoch ist umgekehrt der Verlust bei einer späteren Reflexion geringer.

Das Eingangsstrahlenbündel 110 passiert den Strahlkombinierer 144 und wird anschließend mit dem Strahlteiler 140 in ein Hauptstrahlenbündel 112 und ein Vergleichsstrahlenbündel 114 aufgeteilt. Zudem wird der Eingangsstrahl 108 in einen ersten Hauptstrahl 116 und einen ersten Vergleichsstrahl 118 aufgeteilt. Das Hauptstrahlenbündel 112, inklusive des ersten Hauptstrahls 116, propagiert entlang der ursprünglichen Richtung des Eingangsstrahlenbündels 110 in Richtung der Detektionsfläche 124. Das Vergleichsstrahlenbündel 114, inklusive des ersten Vergleichsstrahls 118, wird in Richtung des Strahlkombinierers 144 abgelenkt, der das Vergleichsstrahlenbündel 114 mittels einer weiteren Reflexion durch den Strahlteiler 140 hindurch in Richtung der Detektionsfläche 124 lenkt. Das Hauptstrahlenbündel 112 und das Vergleichsstrahlenbündel 114 interferieren als Interferenzstrahlenbündel, umfassend einen ersten Interferenzstrahl 152 und einen zweiten Interferenzstrahl 154. Aufgrund der unterschiedlichen Propagation des Hauptstrahlenbündels 112 und des Vergleichsstrahlenbündels 114 treffen der erste Interferenzstrahl 152 und der zweite Interferenzstrahl 154 die Detektionsfläche 124 an unterschiedlichen Punkten. Der zentrale Interferenzstrahl 150 gibt erneut die Propagation des Zentralstrahls des Eingangsstrahlenbündels 110 durch die Interferometerarme wieder. Der erste Interferenzstrahl 152 enthält den ersten Hauptstrahl 116 und der zweite Interferenzstrahl 154 enthält den ersten Vergleichsstrahl 118.

Die Überlappung des Hauptstrahlenbündels 112 und des Vergleichsstrahlenbündels 114 auf der Detektionsfläche 124 kann beispielsweise mittels der Neigung des Strahlkombinierers 144 und/oder des Strahlteilers 140 in Bezug auf die Ausbreitungsrichtung des Eingangsstrahlenbündels 110 eingestellt werden. Durch die Wahl der Reflexion und Transmission des Strahlkombinierers 144 ist es möglich, ein Intensitätsverhältnis des Hauptstrahlenbündels 112 und des Vergleichsstrahlenbündels 114 in dem Interferenzstrahlenbündel einzustellen. Beispielsweise sind die Intensitäten der beiden Strahlenbündel 112, 114 in dem Interferenzstrahlenbündel gleich. Es kann vorteilhaft sein, ein Fabry-Perot-artiges Interferometersystem mit einer geringen Finesse bereitzustellen, da hierdurch ungewünschte Resonanzeffekte, beispielsweise in der Wellenlänge, vermieden werden können.

Es ist möglich, dass aufgrund erneuter teilweiser Reflexion des Vergleichsstrahlenbündels 114 an dem Strahlteiler 140 weitere Strahlenbündel mit geringerer Intensität entstehen könnten. Solche Strahlenbündel können bei dem hier beschriebenen Verfahren berücksichtigt werden. Beispielsweise kann hierzu eine Propagatorabbildung U' berücksichtigt werden, die das Hauptstrahlenbündel 112 (E1) in die Summe des Vergleichsstrahlenbündels 114 (E2) und besagter weiterer Strahlenbündel (E2', E2",...) überführt, U'(E1)=(E2+E2'+E2"+...). In diesem Fall wäre E2 in den obigen Formeln durch (E2+E2'+E2"+...) zu ersetzen. Hierbei kann die Linearität der Feldgleichungen ausgenutzt werden, wodurch mehrere Strahlenbündel zu einem Strahlenbündel zusammengefasst werden können.

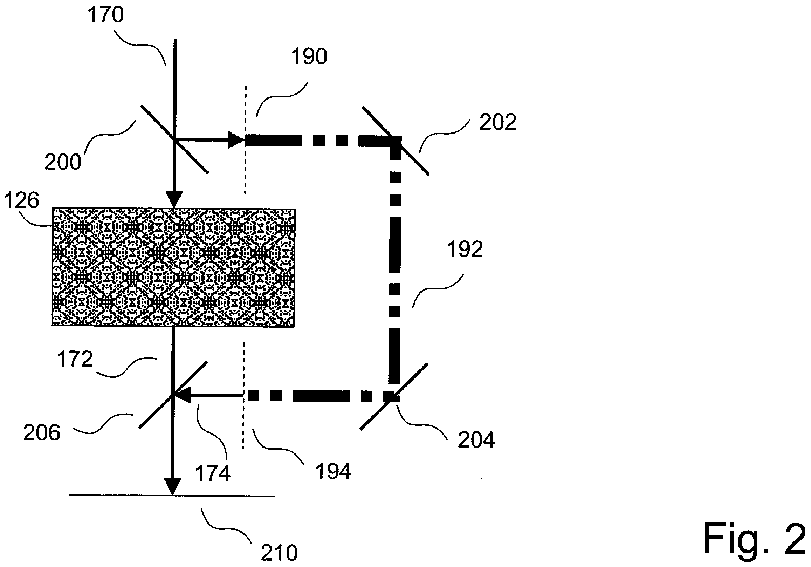

Anhand der schematischen Darstellung der Figur 2 ist ein Ausführungsbeispiel eines hier beschriebenen Verfahrens näher erläutert. Die Figur 2 zeigt schematisch die Rekonstruktion der Phase des Eingangsstrahlenbündels 110 durch die Verwendung eines Teststrahlenbündels 170. Das Teststrahlenbündel 170 wird mittels eines weiteren Strahlteilers 200 in zwei Teile aufgeteilt. Bei dem weiteren Strahlteiler 200 kann es sich um einen physikalischen Strahlteiler, wie beispielsweise ein Prisma, oder um einen digitalen Strahlteiler, wie beispielsweise eine numerische Aufteilung, handeln. Mittels eines ersten Teils des Teststrahlenbündels 170 wird ein erstes Strahlenbündel 172 durch Auslesen des anhand des Interferenstrahlenbündels gebildeten Hologramms 126 erzeugt.

Ferner wird auf einen zweiten Teil des Teststrahlenbündels 170 eine Propagationsabbildung zur Erzeugung eines zweiten Strahlenbündels 174 angewandt. Die Propagationsabbildung entspricht einer Propagation des zweiten Teils des Teststrahlenbündels 170 durch ein optisches System mit einer ersten Weglänge 190, einem ersten weiteren Umlenkelement 202, einer zweiten Weglänge 192, einem zweiten weiteren Umlenkelement 204 und einer dritten Weglänge 194. Das optische System kann weitere optische Komponenten, wie beispielsweise Linsen, Prismen und/oder Wellenplättchen, enthalten. Das optische System bzw. die Propagationsabbildung entspricht dem Optiksystem des Interferometersystems. Mit anderen Worten, das optische System entspricht einer Propagation des Hauptstrahlenbündels 112 durch den ersten Interferometerarm und einer Rückpropagation des propagierten Hauptstrahlenbündels 112 durch den zweiten Interferometerarm. Beispielsweise enthält das Optiksystem des der Figur 2 entsprechenden Interferometersystems ausschließlich Strahlteiler und Umlenkelemente, beispielsweise Spiegel.

Das erste Strahlenbündel 172 und das zweite Strahlenbündel 174 werden mittels eines weiteren, digitalen und/oder physikalischen, Strahlkombinierers 206 überlagert und mit einer Vergleichseinheit 210 verglichen. Falls das erste Strahlenbündel 172 und das zweite Strahlenbündel 174 im Wesentlichen identisch sind (mit Ausnahme örtlicher Intensitätsunterschiede und/oder einer globalen Phase), entspricht das Teststrahlenbündel 170 dem Eingangsstrahlenbündel 110 bzw. dem Hauptstrahlenbündel 112 oder dem Vergleichsstrahlenbündel 114.

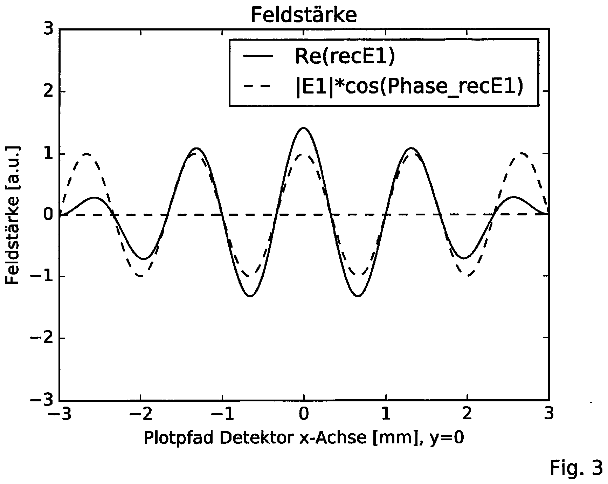

Anhand der Messdaten der Figuren 3 bis 5 ist ein Ausführungsbeispiel des Verfahrens zur Bestimmung einer Phase näher erläutert. Bei dem Ausführungsbeispiel wird beispielhaft für ein Interferometersystem gemäß dem Ausführungsbeispiel der Figur 1a, dessen Optiksystem aus Strahlteilern und Umlenkelementen, beispielsweise Spiegeln, aufgebaut ist, das Verfahren angewandt. Der erste Interferometerarm und der zweite Interferometerarm des Interferometers sind unterschiedlich lang ausgebildet und weisen eine erste Länge L1 bzw. eine zweite Länge L2 auf. Das Eingangsstrahlenbündel 110 ist eine monochromatische ebene Welle, beschrieben durch den Amplitudenfaktor $\exp(i \cdot \mathbf{k} \cdot \mathbf{x})$ und die festgelegte Frequenz $\omega$. Die Ausbreitungsrichtung entspricht der z-Achse und die Detektionsfläche 124 der x,y-Ebene bei z=0.

Das Eingangsstrahlenbündel 110 wird in ein Hauptstrahlenbündel 112 und ein Vergleichsstrahlenbündel 114 aufgeteilt. Das Vergleichsstrahlenbündel 114 wird entlang eines zweiten Interferometerarms propagiert und in dem zweiten Interferometerarm derart gedreht, dass das propagierte Hauptstrahlenbündel auf der Detektionsfläche 124 um 180° gegenüber dem durch einen ersten Interferometerarm propagierten Hauptstrahlenbündels gedreht ist. Ein entlang der Ausbreitungsrichtung verlaufender Zentralstrahl des Vergleichsstrahlenbündels dient als Drehachse. Ferner ist das propagierte Vergleichsstrahlenbündel um eine Weglänge dx gegen das propagierte Hauptstrahlenbündel verschoben.

Die Drehung entspricht der Transformation $(x,y) \rightarrow (-x,-y)$. Für das propagierte Vergleichsstrahlenfeld gilt dann:

$$E2 \sim \exp\left[i(k_x\left[-x-dx\right]-k_y y + k_z[L2-L1])\right],$$

und damit

$$IF_{s,\omega} = \exp\left[i\,(k_x\,[2x+dx]+k_y\,2y-k_z[L2-L1])\right], \text{ mit } k_z = \sqrt{(\omega/c)^2 - k_x^2 - k_y^2}\;.$$

Im Ortsraum entspricht der komplexe Interferenzterm IF einer punktweisen Multiplikation mit der auf der rechten Seite der Gleichung dargestellten Exponentialfunktion. Alternativ kann der komplexe Interferenzterm IF auch mit einer Messung ermittelt werden.

Als Detektionsfläche 124 wird bei dem Ausführungsbeispiel ein Quadrat mit einer Kantenlänge D und MxN Pixeln angenommen. Beispielsweise beträgt die Kantenlänge 6 mm. In x-Richtung ist die Indizierung $x_m$ = -D/2 + mD/M, wobei m=0,1..M-1. In y-Richtung ist die Indizierung $y_n$ = -D/2 + nD/N, wobei n=0,1..N-1. Insbesondere ist es möglich, dass die Gesamtzahl der Pixel in x-Richtung dieselbe ist wie die Gesamtzahl der Pixel in y-Richtung (M=N). Das Zentrum der Detektionsfläche hat bei geradem M und N die Indizes (N/2,M/2) mit (x, y)=(0,0). Die Polarisation des Vergleichsstrahlenbündels bleibt hierbei unverändert.

Die Amplitude des propagierten Hauptstrahlenfeldes entspricht dem Betrag der Planwelle und kann beispielsweise durch Blockieren des Vergleichsstrahlenbündels innerhalb des zweiten Interferometerarms und lediglich Messen des propagierten Hauptstrahlenbündels an der Detektionsfläche bestimmt werden. Beispielsweise handelt es sich bei dem Hauptstrahlenbündel um ein in x-Richtung polarisiertes Vektorfeld, wobei $|E1_x|=1$, $|E1_y|=0$ und $|E1_z|=0$ bei z=0.

In einem weiteren Verfahrensschritt des Ausführungsbeispiels des Verfahrens werden die ersten Polarisationsmatrix, die zweite Polarisationsmatrix und damit die Polarisationsmatrix durch eine "Geraderichtung", beispielsweise eine Linearisierung, des Interferometersystems mittels eines sogenannten Tunnel-Diagramms bestimmt. Insbesondere werden alle Reflexionen an Spiegeln und anderen optischen Elementen aufgefaltet. Die Strahlpropagation durch die beiden Interferometerarme bestimmt sich ferner aus einer Propagation im freien Raum mit Brechungsindex n=1 (Vakuum), einmal um die erste Länge L1 und einmal um die zweite Länge L2. Bei dem zweiten Interferometerarm ist die Verschiebung um die Weglänge dx zu berücksichtigen.

Die Propagationsmatrix des Ausführungsbeispiels entspricht dann einer Lösung der Helmholtz-Gleichungen im Fourier-Raum. Die Propagationsmatrix ist äquivalent zum Rayleigh-Sommerfeld-Propagator. Für eine Propagation zwischen verschiedenen Ebenen, bei denen z konstant gehalten wird, nimmt der Rayleigh-Sommerfeld-Propagator im Fourier-Raum eine besonders einfache Form an (siehe z.B. Diffraction, Fourier Optics and Imaging, Okan K. Ersoy, Wiley-Intersience 2007, Angular Spectrum of Plane Waves, Kapitel 4.3 und Fast Fourier Transform (FFT) Implementation of the Angular Spectrum of Plane Waves, Kapitel 4.4.).

Die erste Propagationsmatrix und die zweite Propagationsmatrix, bei der die Drehung noch nicht berücksichtigt wurde, lauten im Fourier-Raum wie folgt:

$$\hat{U}1_{t,pm',qn',s,pm,qn,\omega} = \delta_{s,t}\,\delta_{pm,pm'}\delta_{qn,qn'}e^{iL1\sqrt{(\omega/c)^2-pm^2-qn^2}},$$

$$\hat{U}2'_{t,pm',qn',s,pm,qn,\omega} = \delta_{s,t}\,\delta_{pm,pm'}\delta_{qn,qn'}e^{iL2\sqrt{(\omega/c)^2-pm^2-qn^2}}.$$

Hierbei sind pm, pm', qn, qn' die k-Vektoren zu den Indizes im Fourier-Raum, passend zu der gewählten Indizierung im Ortsraum und $\delta_{pm,pm'}$, $\delta_{qn,qn'}$ Kronecker-Funkionen. Es gilt: $pm = \dfrac{2\pi}{D}m$ für m=0,..,M-1 und $qn = \dfrac{2\pi}{D}n$ für n=0,..,N-1.

Bei dem Ausführungsbeispiel sind U1 und U2' im Fourier-Raum somit unitäre Diagonalmatrizen.

Die Fourier-Transformation FT des Felds $E_{s,m',n'}$ im Ortsraum in das Feld $\hat{E}_{s,pm,qn}$ im Fourier-Raum und die entsprechende Fourier-Rücktransformation FT$^{-1}$ lauten:

$$\hat{E}_{s,pm,qn} = \sum_{m'=0}^{M-1}\sum_{n'=0}^{N-1}E_{s,m',n'}e^{-2\pi i\,m'\,m/M}e^{-2\pi i\,n'\,n/N} =:\ FT(E),$$

$$E_{s,m,n} = \frac{1}{M\,N}\sum_{m'=0}^{M-1}\sum_{n'=0}^{N-1}\hat{E}_{s,pm',qn'}e^{2\pi i\,m'\,m/M}e^{2\pi i\,n'\,n/N} =:\ FT^{-1}(\hat{E}).$$

Hierbei wurde der konstante Index $\omega$ unterdrückt.

Für die Bestimmung der Propagationsmatrix ist das Produkt der zweiten Propagationsmatrix und des Inversen der ersten Propagationsmatrix zu bilden. Ferner sind die Verschiebung um die Weglänge dx und die Drehung um 180° zu berücksichtigen.

Die Verschiebung um dx entspricht gemäß Fourier-Theorie im Fourier-Raum einer Multiplikation mit einem Phasenfaktor exp(-i·dx·pm). Die Drehung entspricht im Ortsraum der Transformation (x,y)→(-x,-y) (siehe oben); in den Indizes der Detektionsfläche entspricht dies der Transformation (m,n)→(M-m,N-n). Bei geradem M und N ist das Duplett (m,n) = (M/2,N/2) ein Fixpunkt der Drehung. Die Drehung um 180° im Ortsraum ergibt auch eine Drehung um 180° im Fourier-Raum, das heißt $(p_m,q_n)\rightarrow(-p_m,-q_n)$.

Im Folgenden werden Indexpunkte außerhalb der Detektionsfläche, also außerhalb des Indexbereichs, durch Addition/Subtraktion in den Indexbereich gebracht. Beispielsweise entspricht das Pixel mit dem Index (M,N) dem Pixel mit dem Index (0,0). Das Pixel mit dem Index (0,0) kann in der Modellierung der Drehung ein weiterer Fixpunkt sein. Dies kann durch die periodischen Fourier-Randbedingungen bedingt sein. Diese Addition/Subtraktion hat zwar einen Einfluss auf die Wahl der Propagationsmatrix, nicht jedoch auf die Bestimmung des Eingangsstrahlenbündels. Insbesondere sind das Hauptstrahlenbündel und das Vergleichsstrahlenbündel und damit auch das Eingangsstrahlenbündel bei dem Ausführungsbeispiel reale Felder, bei denen keine Randbedingungen an den Außenbereichen der Detektionsfläche angenommen werden.

Insgesamt ergibt sich damit die Propagationsmatrix im Fourier-Raum und, durch entsprechende Fourier-Rücktransformation, die Propagationsmatrix im Ortsraum:

$$\hat{U}_{t,pm',qn',pm,qn,\omega} = e^{-i\,dx\,pm}\delta_{-pm,pm'}\delta_{-qn,qn'}e^{i(L2-L1)\sqrt{(\omega/c)^2-pm^2-qn^2}}$$

$$U_{t,m',n',s,m,n,\omega} = \frac{\delta_{s,t}}{M\,N}\sum_{m''=0}^{M-1}\sum_{n''=0}^{N-1}e^{-2\pi i\,m'\,m''/M}e^{-2\pi i\,n'\,n''/N}e^{-i\,dx\,pm}e^{i(L2-L1)\sqrt{(\omega/c)^2-pm''^2-qn''^2}}e^{-2\pi i\,m''\,m/M}e^{-2\pi i\,n''\,n/N}$$

Beispielsweise können diese Formeln mittels sogenannter "Fast Fourier Transform" (FFT)-Routinen berechnet und/oder angewandt werden. Hierfür eignet sich zum Beispiel Python Scipy.

In einem weiteren Verfahrensschritt des Ausführungsbeispiels wird der komplexe Phasenanpassungsfaktor mittels Phasenanpassung bestimmt. Hierfür werden der komplexe Interferenzterm IF und die Propagationsmatrix näherungsweise für exakt die gleiche Differenz der ersten und der zweiten Länge berechnet. Dadurch ergibt sich ein Phasenanpassungsfaktor $f(\omega)=1$.

In einem weiteren Verfahrensschritt wird mittels der Propagationsmatrix des Optiksystems und des gemessenen Interferogramms die Phase des Eingangsstrahlenbündels bestimmt. Hierfür wird die Bestimmungsgleichung (6) gelöst, wobei der Index $\omega$ unterdrückt wird. Die zu lösende Gleichung lautet somit:

$$\overline{IF_{t,m,n,\omega}}\, E1_{t,m,n,\omega} = \sum_{s,u,v} U_{t,m,n,s,u,v,\omega}\, E1_{s,u,v} \qquad (6b),$$

wobei das Konjugierte des komplexen Interferenzterms IF im Fourier-Raum die folgende Abbildung des Hauptstrahlenbündels E1 erzeugt:

$$\hat{E}1_{s,pm,qn} \to e^{-i\,(k_x\,dx - k_z[L2-L1])}\,\hat{E}1_{s,pm-2kx,qn-2ky}\,.$$

Damit lautet die umformulierte Gleichung (6b) im Fourier-Raum:

$$e^{i\,(-k_x\,dx + k_z[L2-L1])}\,\hat{E}1_{s,pm-2kx,qn-2ky} - e^{-i\,dx\,pm}\,e^{i(L2-L1)\sqrt{(\omega/c)^2 - pm^2 - qn^2}}\,\hat{E}1_{s,-pm,-qn} = 0\,.$$

Diese Gleichung ist eine Eigenwertgleichung für $E1_{s,pm,qn}$ zum Eigenwert 0. Durch Einsetzen wird gezeigt, dass die Eigenwertgleichung für $p_m - 2k_x = -p_m$ und $q_n - 2k_y = -q_n$ erfüllt ist.

Das heißt, bei $k_x = 2\pi \cdot m_{in}/D$ und $k_y = 2\pi \cdot n_{in}/D$, wobei $m_{in}$ und $n_{in}$ ganzzahlig sind und $m_{in}=0,..M-1$; $n_{in}=0..N-1$, hat das Gleichungssystem bis auf eine Phase (und die Normierung) folgende Lösung für das rekonstruierte Feld:

$$rec\hat{E}1_{s,pm,qn} = \begin{cases} 1 & \text{für } m = m_{in}, \quad n = n_{in}, \quad s = 1 \\ 0 & sonst \end{cases}$$

Dies entspricht der Fourier-Transformierten des Hauptstrahlenbündels. Durch eine numerische Rechnung kann zudem gezeigt werden, dass die Lösung zudem stabil ist. Es existiert also, beispielsweise für L2-L1 = 1cm, keine weitere Lösung der Gleichung. Zudem kann numerisch gezeigt werden, dass für nicht ganzzahliges $m_{in}$ und/oder $n_{in}$ die Gleichung (6b) eine eindeutige Näherungslösung hat. Hierbei wird die Lösung zum niedrigsten Eigenwert gesucht. Die numerischen Ergebnisse für $m_{in}=4,5$ und $n_{in}=0$ werden in der Figur 3 gezeigt.

Die Figur 3 zeigt die Amplitude des Realteils des Feldes für $recE1_{1,m,N/2}$ und für eine Welle, bei der die Phase von $recE1_{1,m,N/2}$, aber die Amplitude des Hauptstrahlenbündels 112 verwendet wird, entlang der x-Achse, also für die Indizes m=0..M, für y=0. Bei der letzteren Lösung, bei der nur die Phase der rekonstruierten Lösung verwendet wird, wird das Gleichungssystem (6b) somit nur zur Phasenbestimmung verwendet. Für dieses numerische Beispiel wurde $m_{in}=4,5$ verwendet. Das kann man an Figur 3 durch Abzählen der Knotenlinien erkennen. Das Eingangsfeld E1 ist somit nicht periodisch im Betrachtungsfenster der Diskretisierung. Das numerische Verfahren liefert aber das richtige Ergebnis für die Phase. Insbesondere stimmt die gestrichelte Linie mit dem Eingangsfeld E1 überein. Dies zeigt die hohe Stabilität des Verfahrens, selbst wenn die Daten bzw. die Propagatorabbildung, insbesondere leicht, fehlerhaft sind. Im Ergebnis liefert dies eine Lösung, die in der Phase bis auf $2\cdot10^{-4}$ rad mit dem Hauptstrahlenbündel E1 übereinstimmt.

Grund der Abweichung kann die unterschiedliche Behandlung der Felder am Rand der Detektionsfläche sein.

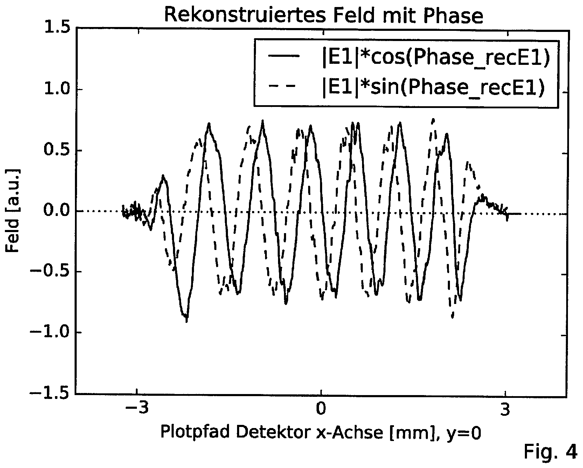

Die Figur 4 zeigt eine Messung eines ersten und eines zweiten Datensatzes für ein Feld entlang der x-Achse, also für die Indizes m=0..M, für y=0. Bei der Messung wurden zwei Datensätze in der Bestimmungsgleichung (6b) verwendet. Bei dem ersten Datensatz beträgt die Weglänge dx = 0 pixel, bei dem zweiten Datensatz beträgt die Weglänge dx = 4,9 pixel. Das Vergleichsstrahlenbündel wurde um einen Drehwinkel von 176,1° gedreht. Der Wegunterschied L1-L2 beträgt 1,65 mm. Die Phasenbestimmung des komplexen Interferenzterms IF erfolgte nach der Phasenverschiebungs-Methode mit einem 8-Bit-Detektor.

Das Eingangsstrahlenbündel des Ausführungsbeispiels ist ein an einer Irisblende gebeugtes Gauß'sches Strahlenbündel. Die Beugung an der Iris-Blende entspricht einer sogenannten Fresnel-Beugung. Durch eine Anwendung eines hier beschriebenen Verfahrens kann die gemessene Fresnel-Beugung mit der Theorie verglichen werden. Hierdurch können Rückschlüsse auf die Effektivität des Verfahrens gezogen werden.

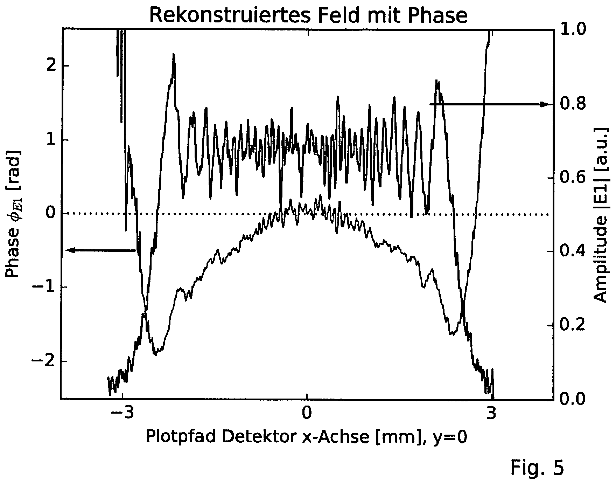

Der Stahleinfall erfolgt leicht schief auf die optische Achse, vergleichbar zum Einfall der Planwelle im Beispiel zur Figur 3. Die in Figur 4 sichtbare Strukturierung der Planwelleninterferenz ist reproduzierbar und stellt den Einfluss der Fresnel-Beugung dar. Die Beugungseffekte werden in Figur 5 genauer dargestellt. Hierfür wird der Phaseneinfluss, der vom schiefen Einfall kommt, kompensiert und die Ergebnisse werden bezogen auf einen geraden Einfall dargestellt.

Die Figur 5 zeigt Phase und Amplitude des Hauptstrahlenbündels auf der Detektionsfläche, die 200 mm nach der Irisblende zur Fresnel-Beugung angeordnet ist. Die dargestellten Schwankungen und Oszillationen, sowohl in der Amplitude des Hauptstrahlenbündels $|E1|$ als auch in der Phase $\Phi_{E1}$ sind mittels unabhängiger Messungen bis auf $1 \cdot 10^{-2}$ rad reproduzierbar. Die gemessenen Daten sind kompatibel mit einer sogenannten Grenzwellen-Simulation (Englisch: boundary wave) der Beugung an der Irisblende. Für diese Verifizierung wurde das gemessene Feld numerisch in z-Richtung bis auf die Position der Blende propagiert. Es ergibt sich eine gute Übereinstimmung zur theoretischen Erwartung, die ein "abgeschnittenes" Feld auf der Blende ist.

Die explizite Rechnung und die in den Figuren gezeigten Ergebnisse des Verfahrens zum Ausführungsbeispiel zeigen, dass selbst unter ungünstigen Bedingungen das rekonstruierte Feld $recE1_{1,m,n,\omega}$ die Lösung für die korrekte Phase enthält. Das rekonstruierte Feld enthält jedoch nicht notwendigerweise die korrekte Amplitude.

Mit der hier beschriebenen referenzstrahlfreien, insbesondere skalar und vektoriell referenzstrahlfreien, Phasenbestimmung ergeben sich mehrere Vorteile. Insbesondere kann der Verzicht auf einen, insbesondere externen, Referenzstrahl zu einer maximalen Flexibilität beim Design der auszuwertenden Interferometersysteme führen, da bei einer referenzstrahlfreien Phasenbestimmung auch komplizierte Situationen ohne Näherung erfasst werden können. Auch die Anforderungen an die Kohärenzlänge des eingesetzten Feldes sind reduziert; hierdurch kann beispielsweise die Fourier-Transformationseigenschaft von Interferometern im Zeit-/Frequenzbereich genutzt werden. Auch eine Feldvermessung bei unterschiedlichen Frequenzen ist denkbar. Das exakte systematische Verfahren ist zudem im Formalismus kompatibel mit der Fourier-Optik und gepulsten Lasern. Das hier beschriebene Verfahren erlaubt ermöglicht das digitale Verfahren die numerische Bestimmung der Phase eines beliebigen Eingangsfeldes.

Zudem kann das Verfahren in der Metrologie, bei der Qualitätskontrollen von Werkstücken in der Produktion, bei dreidimensionaler Oberflächeninspektion, bei der Prüfung der Echtheit von Geldscheinen, in der holographischen Mikroskopie mit dreidimensionaler, insbesondere hoher, Auflösung (sogenannte "Super Resolution"), in der dreidimensionalen Beugungstomographie, der Röntgenstrahl-Tomographie und/oder der Neutronenstrahl-Tomographie eingesetzt werden. Auch relative Distanz-Bestimmungen bei semitransparenten Objekten, zum Beispiel bei der Terahertz-Trennung eines Objektes hinter einer semitransparenten Wand, sind möglich.

Das Verfahren zur referenzstrahlfreien Bestimmung der Phase ist sowohl numerisch wie experimentell erfolgreich getestet (siehe hierzu Figur 4 und 5). Die Phasenrekonstruktion erfolgt mit einer Genauigkeit die durch den eingesetzten Detektor bestimmt ist, d.h. ein 8-Bit-Detektor erlaubt eine Phasenbestimmung mit einer höchsten Genauigkeit von etwa 2E-8 Bit, d.h. 0,004 rad. Experimentell wurde unter diesen Bedingungen eine Genauigkeit von ca. 0,01 rad erreicht. Dies stellt eine gute Übereinstimmung mit den experimentellen Ergebnissen dar.

Die Erfindung ist nicht durch die Beschreibung anhand der Ausführungsbeispiele und/oder durch die Beschreibung anhand der theoretischen Modelle auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen, den Ausführungsbeispielen und/oder den theoretischen Modellen angegeben ist. beispielsweise den Bau ultrakompakter Interferometersysteme zur Phasenvermessung, die gegebenenfalls auch als "internal reflection device" ausgeführt sein können, und bei einer oder mehreren Wellenlängen die Phase eines Lichtfelds digital vermessen können.

Durch die beschriebenen Vorteile sind verschiedenste Anwendungen des Verfahrens denkbar. Beispielsweise ermöglicht das physikalische Verfahren mit einem physikalisch gespeicherten Hologramm die Bestimmung bzw. die Erkennung eines komplexen, phasenbehafteten Eingangsfeldes, indem das Eingangsfeld gegen das Hologramm geprüft wird. Nur wenn die Auslesung des Hologramms eine Übereinstimmung mit dem intern erzeugten Teststrahl anzeigt, ist das Eingangsfeld das Feld, das für die Erzeugung des Hologramms verwendet wurde. Aus dem Hologramm selbst kann das Eingangsfeld nicht abgeleitet werden. Eine solche Methode ist für Authentizitätsnachweise und Kryptographie, beispielsweise im Rahmen von asymmetrischen Verschlüsselungsverfahren, geeignet.

Bezugszeichenliste:

108   Eingangsstrahl
110   Eingangsstrahlenbündel
112   (propagiertes) Hauptstrahlenbündel

114  (propagiertes) Vergleichsstrahlenbündel
116  erster Hauptstrahl
118  erster Vergleichsstrahl
120  Blende
124  Detektionsfläche
126  Hologramm
130  optisches Element
132  Linse
134  zweite Linse
136  erste Linse
138  diffraktives optisches Element
140  Strahlteiler
142  erstes Umlenkelement
144  Strahlkombinierer
146  zweites Umlenkelement
150  zentraler Interferenzstrahl
152  erster Interferenzstrahl
154  zweiter Interferenzstrahl
170  Teststrahlenbündel
172  erstes Strahlenbündel
174  zweites Strahlenbündel
190  erste Weglänge
192  zweite Weglänge
194  dritte Weglänge
200  weiterer Strahlteiler
202  erstes weiteres Umlenkelement
204  zweites weiteres Umlenkelement
206  weiterer Strahlkombinierer
210  Vergleichseinheit


**Patentansprüche**

1.  Verfahren zur Bestimmung zumindest einer Phase eines Eingangsstrahlenbündels (110, $E_{in}$) aufweisend die folgenden Schritte:

a) Bereitstellen des Eingangsstrahlenbündels (110, $E_{in}$) mit einer Vielzahl von Eingangsstrahlen, die jeweils eine Phase aufweisen;
b) Bereitstellen eines Interferometersystems (100) umfassend eine Detektionsfläche (124) und ein Optiksystem zur Bereitstellung eines ersten Interferometerarms und eines zweiten Interferometerarms, aufweisend zumindest einen Strahlteiler (140) und einen Strahlkombinierer (144);
c) Aufteilen des Eingangsstrahlenbündels (110, $E_{in}$) in ein Hauptstrahlenbündel (112, E1) und ein Vergleichsstrahlenbündel (114, E2) mit dem Strahlteiler (140) derart, dass jeder Eingangsstrahl in einen Hauptstrahl des Hauptstrahlenbündels (112, E1) und einen Vergleichsstrahl des Vergleichsstrahlenbündels (114, E2) aufgeteilt wird, wobei jedem Eingangsstrahl ein Hauptstrahl und ein Vergleichsstrahl eindeutig zugeordnet ist;
d) Propagieren des Hauptstrahlenbündels (112, E1) entlang des ersten Interferometerarms und des Vergleichsstrahlenbündels (114, E2) entlang des zweiten Interferometerarms;
e) Überlagern des propagierten Hauptstrahlenbündels (112, E1) und des propagierten Vergleichsstrahlenbündels (114, E2) zu einem Interferenzstrahlenbündel (126) mit einer Vielzahl von Interferenzstrahlen unter Verwendung des Strahlkombinierers (144);
f) Erzeugen eines Hologramms (126) durch Propagation des Interferenzstrahlenbündels auf die Detektionsfläche (124) und Messen zumindest eines Interferenzmusters des Interferenzstrahlenbündels;
g) Bestimmen einer Propagatorabbildung (U) des Optiksystems, wobei die Propagatorabbildung (U) eine Propagation des propagierten Hauptstrahlenbündels (112, E1) in das propagierte Vergleichsstrahlenbündel (114, E2) beschreibt;
h) Bereitstellen eines Teststrahlenbündels (170) mit einer Testphase;
i) Auslesen des Hologramms (126) mit zumindest einem Teil des Teststrahlenbündels (170) zur Erzeugung eines ersten Strahlenbündels (172) und Anwenden der Propagationsabbildung (U) auf zumindest einen Teil des Teststrahlenbündels (170) zur Erzeugung eines zweiten Strahlenbündels (174);

j) Vergleich des ersten Strahlenbündels (172) und des zweiten Strahlenbündels (174); und

k) Ermitteln zumindest eines Teils der Phase des Eingangsstrahlenbündels (110,$E_{in}$) aus der Testphase des Teststrahlenbündels (170), wobei

- die Schritte h) bis j) solange wiederholt werden, bis das erste Strahlenbündel (172) und das zweite Strahlenbündel (174), mit Ausnahme örtlicher Intensitätsunterschiede und/oder einer globalen Phase, im Wesentlichen identisch sind,

- die Propagation in Schritt d) derart erfolgt, dass zumindest ein Teil der Interferenzstrahlen des Interferenzstrahlenbündels jeweils eine Überlagerung eines einem ersten Eingangsstrahl des Eingangsstrahlenbündels (110, $E_{in}$) zugeordneten Hauptstrahls des propagierten Hauptstrahlenbündels (E1, 112) und eines einem zweiten, von dem ersten Eingangsstrahl verschiedenen, Eingangsstrahl des Eingangsstrahlenbündels (110, $E_{in}$) zugeordneten Vergleichsstrahls des propagierten Vergleichsstrahlenbündels (E2, 114) ist, und

- das Verfahren frei von der Verwendung eines Referenzstrahls ist.

2. Verfahren nach dem vorherigen Anspruch, wobei die Propagation in Schritt d) derart erfolgt, dass ein Interferenzstrahl des Interferenzstrahlenbündels eine Überlagerung eines einem ersten Eingangsstrahl des Eingangsstrahlenbündels (110, $E_{in}$) zugeordneten Hauptstrahls des propagierten Hauptstrahlenbündels (E1, 112) und eines einem zweiten, mit dem ersten Eingangsstrahl identischen, Eingangsstrahl des Eingangsstrahlenbündels (110, $E_{in}$) zugeordneten Vergleichsstrahls des propagierten Vergleichsstrahlenbündels (E2, 114) ist.

3. Verfahren nach einem der vorherigen Ansprüche, wobei das Teststrahlenbündel (170) beliebig aus einer Menge von Strahlenbündeln, die unter Anwendung der Propagationsabbildung (U) zu einem ersten Strahlenbündel (174) werden, wählbar ist.

4. Verfahren nach einem der vorherigen Ansprüche, wobei der erste Interferometerarm und/oder der zweite Interferometerarm des Optiksystems ein Strahlrotationselement umfasst und das Propagieren in Schritt d) den folgenden weiteren Schritt aufweist:

- Drehen des Hauptstrahlenbündels (112, E1) und/oder des Vergleichsstrahlenbündels (114, E2) um eine entlang der Ausbreitungsrichtung verlaufende Drehachse mit einem Drehwinkel unter Verwendung des Strahlrotationselements.

5. Verfahren nach einem der vorherigen Ansprüche, wobei der erste Interferometerarm und/oder der zweite Interferometerarm des Optiksystems zumindest eine Linse umfasst und das Propagieren in Schritt d) den folgenden weiteren Schritt aufweist:

- Fokussieren und/oder Defokussieren des Hauptstrahlenbündels (112, E1) und/oder des Vergleichsstrahlenbündels (114, E2) mit der zumindest einen Linse.

6. Verfahren nach einem der vorherigen Ansprüche, wobei das Bestimmen der Propagatorabbildung (U) in Schritt g) die folgenden Schritte aufweist:

f1) Ermitteln einer ersten Propagatorabbildung (U1), die eine Propagation des Eingangsstrahlenbündels (110, $E_{in}$) durch den Strahlteiler (140) und entlang des ersten Interferometerarms beschreibt;

f2) Ermitteln einer zweiten Propagatorabbildung (U2), die eine Propagation des Eingangsstrahlenbündels (110, $E_{in}$) durch den Strahlteiler (140) und entlang des zweiten Interferometerarms beschreibt;

f3) Invertieren der ersten Propagatorabbildung (U1); und

f4) Multiplizieren des Inversen der ersten Propagatorabbildung (U1) mit der zweiten Propagatorabbildung (U2) zur Bestimmung der Propagatorabbildung (U).

7. Verfahren nach einem der vorherigen Ansprüche, wobei das Interferometersystem (100) ferner eine Strahlquelle aufweist, die dazu eingerichtet ist, ein entlang einer Ausbreitungsrichtung (z) propagierendes Initialstrahlenbündel mit einer Vielzahl von Initialstrahlen zu emittieren, ferner aufweisend die folgenden Schritte:

b1) Bereitstellen eines Objekts mit zumindest einer Außenfläche;

b2) Bestrahlen zumindest eines Teils des Objekts mit dem Initialstrahlenbündel derart, dass zumindest ein Teil der Initialstrahlen des Initialstrahlenbündels durch eine Reflexion an Objektpunkten der Außenfläche in die Vielzahl von Eingangsstrahlen des Eingangsstrahlenbündels (110, $E_{in}$) überführt wird, wobei

- die Phase jeden Eingangsstrahls eine Phasenverschiebung in Bezug zu einem dem Eingangsstrahl eindeutig, insbesondere eineindeutig, zugeordneten Initialstrahl des zumindest einen Teils der Initialstrahlen ist.

8. Verfahren nach einem der vorherigen Ansprüche, wobei die Detektionsfläche dazu eingerichtet ist, das Hologramm (126) zu speichern, ferner aufweisend den folgenden Schritt:

- Auslesen des Hologramms (126) zur Rekonstruktion der holographischen Abbildung des Objekts, wobei das Auslesen ein Beugen des Vergleichsstrahlenbündels (114, E2) oder des Hauptstrahlenbündels (112, E1) an dem Hologramm (126) beinhaltet.

9. Verfahren nach einem der vorherigen Ansprüche, wobei das Ermitteln der Phase im Verfahrensschritt h) zumindest einen der folgenden weiteren Schritte beinhaltet:

h1) Auswählen einer Frequenz ($\omega$) die Teil eines Spektrums des Hauptstrahlenbündels (112, E1) ist und Ermitteln des Hologramms (126) bei dieser Frequenz ($\omega$);
h2) Bestimmen der Intensität und/oder der Amplitude des propagierten Hauptstrahlenbündels (112, E1) und/oder Bestimmen der Intensität und/oder der Amplitude des propagierten Vergleichsstrahlenbündels (114, E2) auf der Detektionsfläche (124);
h3) Bestimmen eines komplexen Interferenzterms (IF) des Hologramms (126);
h4) Bestimmen eines komplexen Phasenanpassungsfaktors ($f(\omega)$), der mögliche Skalen und Gesamtphasenunterschiede zwischen der Bestimmung der Propagatorabbildung (U) und dem komplexen Interferenzterms (IF) berücksichtigt.

10. Verfahren nach dem vorherigen Anspruch, wobei die Verfahrensschritte h2) und h3) mit einer gemeinsamen Bestimmungsmethode, insbesondere einer Phasenverschiebungs-Methode und/oder einer Trägerphasen-Methode, durchgeführt werden.

## Claims

1. Method for determining at least one phase of an input beam bundle (110, $E_{in}$), comprising the following steps:

a) providing the input beam bundle (110, $E_{in}$) which comprises a plurality of input beams, each having a phase;
b) providing an interferometer system (100) which comprises a detection surface (124) and an optical system in order to provide a first interferometer arm and a second interferometer arm, having at least one beam splitter (140) and one beam combiner (144);
c) splitting the input beam bundle (110, $E_{in}$) into a main beam bundle (112, E1) and a comparison beam bundle (114, E2) by means of the beam splitter (140) such that each input beam is split into a main beam of the main beam bundle (112, E1) and a comparison beam of the comparison beam bundle (114, E2), one main beam and one comparison beam being clearly associated with each input beam;
d) propagating the main beam bundle (112, E1) along the first interferometer arm and the comparison beam bundle (114, E2) along the second interferometer arm;
e) superimposing the propagated main beam bundle (112, E1) and the propagated comparison beam bundle (114, E2), by using the beam combiner (144), so as to form an interference beam bundle (126) which comprises a plurality of interference beams;
f) generating a hologram (126) by propagating the interference beam bundle onto the detection surface (124) and measuring at least one interference pattern of the interference beam bundle;
g) determining a propagator image (U) of the optical system, the propagator image (U) describing a propagation of the propagated main beam bundle (112, E1) into the propagated comparison beam bundle (114, E2);
h) providing a test beam bundle (170) which has a test phase;
i) reading the hologram (126) by means of at least a portion of the test beam bundle (170) in order to generate a first beam bundle (172) and applying the propagation image (U) to at least a portion of the test beam bundle (170) in order to generate a second beam bundle (174);
j) comparing the first beam bundle (172) and the second beam bundle (174); and

k) determining at least a portion of the phase of the input beam bundle (110, $E_{in}$) from the test phase of the test beam bundle (170), wherein

- steps h) to j) are repeated until the first beam bundle (172) and the second beam bundle (174), with the exception of local intensity differences and/or a global phase, are substantially identical,
- the propagation in step d) takes place such that each of at least a portion of the interference beams of the interference beam bundle is a superimposition of a main beam of the propagated main beam bundle (E1, 112), associated with a first input beam of the input beam bundle (110, $E_{in}$), and of a comparison beam of the propagated comparison beam bundle (E2, 114), associated with a second input beam of the input beam bundle (110, $E_{in}$) that is different from the first input beam, and
- the method is free of the use of a reference beam.

2. Method according to the preceding claim, wherein the propagation in step d) takes place such that an interference beam of the interference beam bundle is a superimposition of a main beam of the propagated main beam bundle (E1, 112), associated with a first input beam of the input beam bundle (110, $E_{in}$), and of a comparison beam of the propagated comparison beam bundle (E2, 114), associated with a second input beam of the input beam bundle (110, $E_{in}$) that is identical to the first input beam.

3. Method according to any one of the preceding claims, wherein the test beam bundle (170) is arbitrarily selectable from a set of beam bundles which become a first beam bundle (174) when the propagation image (U) is applied.

4. Method according to any one of the preceding claims, wherein the first interferometer arm and/or the second interferometer arm of the optical system comprises a beam rotation element and the propagation in step d) comprises the following further step:

- rotating the main beam bundle (112, E1) and/or the comparison beam bundle (114, E2), by using the beam rotation element, through a rotation angle about an axis of rotation that extends along the propagation direction.

5. Method according to any one of the preceding claims, wherein the first interferometer arm and/or the second interferometer arm of the optical system comprises at least one lens and the propagation in step d) comprises the following further step:

- focusing and/or defocusing the main beam bundle (112, E1) and/or the comparison beam bundle (114, E2) by means of the at least one lens.

6. Method according to any one of the preceding claims, wherein the determination of the propagator image (U) in step g) comprises the following steps:

f1) determining a first propagator image (U1) which describes a propagation of the input beam bundle (110, $E_{in}$) through the beam splitter (140) and along the first interferometer arm;
f2) determining a second propagator image (U2) which describes a propagation of the input beam bundle (110, $E_{in}$) through the beam splitter (140) and along the second interferometer arm;
f3) inverting the first propagator image (U1); and
f4) multiplying the inverse of the first propagator image (U1) by the second propagator image (U2) in order to determine the propagator image (U).

7. Method according to any one of the preceding claims, wherein the interferometer system (100) further comprises a beam source which is designed to emit an initial beam bundle which comprises a plurality of initial beams and which propagates along a propagation direction (z), further comprising the following steps:

b1) providing an object which has at least one outer surface;
b2) irradiating at least a portion of the object with the initial beam bundle such that at least a portion of the initial beams of the initial beam bundle is transformed by reflection at object points on the outer surface into the plurality of input beams of the input beam bundle (110, $E_{in}$), wherein

- the phase of each input beam is a phase shift relative to an initial beam of the at least a portion of the initial beams that is clearly, in particular uniquely, associated with the input beam.

8. Method according to any one of the preceding claims,
wherein the detection surface is designed to store the hologram (126), further comprising the following step:

- reading the hologram (126) in order to reconstruct the holographic image of the object, the reading including a diffraction of the comparison beam bundle (114, E2) or of the main beam bundle (112, E1) at the hologram (126).

9. Method according to any one of the preceding claims,
wherein the determination of the phase in method step h) includes at least one of the following further steps:

h1) selecting a frequency ($\omega$) which is part of a spectrum of the main beam bundle (112, E1) and determining the hologram (126) at this frequency ($\omega$);
h2) determining the intensity and/or the amplitude of the propagated main beam bundle (112, E1) and/or determining the intensity and/or the amplitude of the propagated comparison beam bundle (114, E2) on the detection surface (124) ;
h3) determining a complex interference term (IF) of the hologram (126);
h4) determining a complex phase-matching factor ($f(\omega)$) which takes into account possible scales and total phase differences between the determination of the propagator image (U) and the complex interference term (IF).

10. Method according to the preceding claim, wherein method steps h2) and h3) are carried out by means of a common determination method, in particular a phase shift method and/or a carrier phase method.

**Revendications**

1. Procédé de détermination d'au moins une phase d'un faisceau de rayons d'entrée (110, $E_{in}$), comprenant les étapes suivantes :

a) préparation du faisceau de rayons d'entrée (110, $E_{in}$) avec une pluralité de rayons d'entrée, comportant chacun une phase ;
b) préparation d'un système d'interféromètre (100) comprenant une surface de détection (124) et un système optique pour la préparation d'un premier bras d'interféromètre et d'un deuxième bras d'interféromètre, comportant au moins un séparateur de faisceau (140) et un combineur de faisceau (144) ;
c) séparation du faisceau de rayons d'entrée (110, $E_{in}$) en un faisceau de rayons principaux (112, E1) et un faisceau de rayons de comparaison (114, E2) par le séparateur de faisceau (140) de telle manière que chaque rayon d'entrée soit divisé en un rayon principal du faisceau de rayons principaux (112, E1) et un rayon de comparaison du faisceau de rayons de comparaison (114, E2), un rayon principal et un rayon de comparaison étant associés de manière univoque à chaque rayon d'entrée ;
d) propagation du faisceau de rayons principaux (112, E1) le long du premier bras d'interféromètre et du faisceau de rayons de comparaison (114, E2) le long du deuxième bras d'interféromètre ;
e) superposition du faisceau de rayons principaux (112, E1) propagé et du faisceau de rayons de comparaison (114, E2) propagé pour former un faisceau de rayons d'interférence (126) avec une pluralité de rayons d'interférence en recourant au combineur de faisceau (144) ;
f) génération d'un hologramme (126) par propagation du faisceau de rayons d'interférence sur la surface de détection (124) et mesure d'au moins un motif d'interférence du faisceau de rayons d'interférence ;
g) détermination d'un graphique de propagation (U) du système optique, ledit graphique de propagation (U) décrivant une propagation du faisceau de rayons principaux (112, E1) propagé dans le faisceau de rayons de comparaison (114, E2) propagé ;
h) préparation d'un faisceau de rayons de test (170) avec une phase de test ;
i) extraction de l'hologramme (126) avec au moins une partie du faisceau de rayons de test (170) pour générer un premier faisceau de rayons (172) et application du graphique de propagation (U) sur au moins une partie du faisceau de rayons de test (170) pour générer un deuxième faisceau de rayons (174) ;
j) comparaison du premier faisceau de rayons (172) et du deuxième faisceau de rayons (174) ; et
k) détermination d'au moins une partie de la phase du faisceau de rayons d'entrée (110, $E_{in}$) à partir de la phase de test du faisceau de rayons de test (170), où

- les étapes h) à j) sont répétées jusqu'à ce que le premier faisceau de rayons (172) et le deuxième faisceau de rayons (174) soient sensiblement identiques, à l'exception de différences locales d'intensité et/ou d'une phase globale,
- la propagation lors de l'étape d) est réalisée de telle manière qu'au moins une partie des rayons d'interférence du faisceau de rayons d'interférence est une superposition d'un rayon principal du faisceau de rayons principaux (E1, 112) propagé associé à un premier rayon d'entrée du faisceau de rayons d'entrée (110, $E_{in}$) et d'un rayon de comparaison du faisceau de rayons de comparaison (E2, 114) propagé associé à un deuxième rayon d'entrée du faisceau de rayons d'entrée (110, $E_{in}$) différent du premier rayon d'entrée, et
- le procédé est exempt de l'utilisation d'un rayon de référence.

2. Procédé selon la revendication précédente, où la propagation lors de l'étape d) est réalisée de telle manière qu'un rayon d'interférence du faisceau de rayons d'interférence est une superposition d'un rayon principal du faisceau de rayons principaux (E1, 112) propagé associé à un premier rayon d'entrée du faisceau de rayons d'entrée (110, $E_{in}$) et d'un rayon de comparaison du faisceau de rayons de comparaison (E2, 114) propagé associé à un deuxième rayon d'entrée du faisceau de rayons d'entrée (110, $E_{in}$), identique au premier rayon d'entrée.

3. Procédé selon l'une des revendications précédentes, où le faisceau de rayons de test (170) peut être librement sélectionné parmi une pluralité de faisceaux de rayons devenant un premier faisceau de rayons (174) en appliquant le graphique de propagation (U).

4. Procédé selon l'une des revendications précédentes, où le premier bras d'interféromètre et/ou le deuxième bras d'interféromètre du système optique comprennent un élément de rotation de rayon, et où la propagation lors de l'étape d) comprend l'autre étape suivante :

- rotation suivant un angle de rotation du faisceau de rayons principaux (112, E1) et/ou du faisceau de rayons de comparaison (114, E2) autour d'un axe de rotation s'étendant dans la direction de propagation en recourant à l'élément de rotation de rayons.

5. Procédé selon l'une des revendications précédentes, où le premier bras d'interféromètre et/ou le deuxième bras d'interféromètre du système optique comprennent au moins une lentille, et où la propagation lors de l'étape d) comprend l'autre étape suivante :

- focalisation et/ou défocalisation du faisceau de rayons principaux (112, E1) et/ou du faisceau de rayons de comparaison (114, E2) par ladite au moins une lentille.

6. Procédé selon l'une des revendications précédentes, où la détermination du graphique de propagation (U) lors de l'étape g) comprend les étapes suivantes :

f1) détermination d'un premier graphique de propagation (U1) décrivant une propagation du faisceau de rayons d'entrée (110, $E_{in}$) par le séparateur de faisceau (140) et le long du premier bras d'interféromètre ;
f2) détermination d'un deuxième graphique de propagation (U2) décrivant une propagation du faisceau de rayons d'entrée (110, $E_{in}$) par le séparateur de faisceau (140) et le long du deuxième bras d'interféromètre ;
f3) inversion du premier graphique de propagation (U1) ; et
f4) multiplication de l'inversion du premier graphique de propagation (UI) par le deuxième graphique de propagation (U2) pour la détermination du graphique de propagation (U).

7. Procédé selon l'une des revendications précédentes, où le système d'interféromètre (100) comporte en outre une source de rayons prévue pour émettre un faisceau de rayons initiaux avec une pluralité de rayons initiaux se propageant dans une direction de propagation (z), et comprenant en outre les étapes suivantes :

b1) préparation d'un objet avec au moins une surface extérieure ;
b2) irradiation d'au moins une partie de l'objet par le faisceau de rayons initiaux, de telle manière qu'au moins une partie des rayons initiaux du faisceau de rayons initiaux soit transmise vers la pluralité de rayons d'entrée du faisceau de rayons d'entrée (110, $E_{in}$) par réflexion sur des points d'objet de la surface extérieure, où

- la phase de chaque rayon d'entrée est un décalage de phase par rapport à un rayon initial de ladite au moins une partie des rayons initiaux, associé en particulier de manière univoque au rayon d'entrée.

8. Procédé selon l'une des revendications précédentes, où la surface de détection est prévue pour mémoriser l'hologramme (126), comprenant en outre l'étape suivante :

- extraction de l'hologramme (126) pour la reconstruction de la représentation holographique de l'objet, ladite extraction comprenant une courbure du faisceau de rayons de comparaison (114, E2) ou du faisceau de rayons principaux (112, E1) sur l'hologramme (126).

9. Procédé selon l'une des revendications précédentes, où la détermination de la phase lors de l'étape h) comprend au moins une des autres étapes suivantes :

h1) sélection d'une fréquence ($\omega$) faisant partie d'un spectre du faisceau de rayons principaux (112, E1) et détermination de l'hologramme (126) pour cette fréquence ($\omega$) ;
h2) détermination de l'intensité et/ou de l'amplitude du faisceau de rayons principaux (112, E1) propagé et/ou détermination de l'intensité et/ou de l'amplitude du faisceau de rayons de comparaison (114, E2) propagé sur la surface de détection (124) ;
h3) détermination d'un terme d'interférence complexe (IF) de l'hologramme (126) ;
h4) détermination d'un facteur d'adaptation de phase complexe (f($\omega$)), tenant compte d'échelles et de différentiels de phase totaux éventuels entre la détermination du graphique de propagation (U) et le terme d'interférence complexe (IF).

10. Procédé selon la revendication précédente, où les étapes h2) et h3) sont exécutées avec une méthode de détermination commune, en particulier une méthode de décalage de phase et/ou une méthode à phase de porteuse.

Fig. 1a

EP 3 465 074 B1

Fig. 1b

EP 3 465 074 B1

Fig. 1c

Fig. 1d

EP 3 465 074 B1

Fig. 1e

EP 3 465 074 B1

Fig. 2

**Feldstärke**

Fig. 3

EP 3 465 074 B1

**Rekonstruiertes Feld mit Phase**

Legende:
— |E1|*cos(Phase_recE1)
– – |E1|*sin(Phase_recE1)

Y-Achse: Feld [a.u.]
X-Achse: Plotpfad Detektor x-Achse [mm], y=0

Fig. 4

**Rekonstruiertes Feld mit Phase**

Phase $\phi_{E1}$ [rad]

Amplitude $|E1|$ [a.u.]

Plotpfad Detektor x-Achse [mm], y=0

Fig. 5

EP 3 465 074 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4396289 A

**In der Beschreibung aufgeführte Nicht-Patentliteratur**

- Fourier Optics and Imaging. Wiley-Intersience, 2007
- Introduction to Fourier Optics. McGraw Hill, 1998
- **DRUCKSCHRIFT.** Handbook of optical Metrology. CRC Press
- **BORN ; WOLF.** Principles of Optics. University Press, vol. 7
- **DIFFRACTION.** Fourier Optics and Imaging. Wiley-Intersience, 2007